# EUROPEAN PATENT SPECIFICATION

(11) **EP 2 368 617 B1**
(45) Date of publication and mention of the grant of the patent: **23.04.2014**
(21) Application number: 10190134.6
(22) Date of filing: 05.11.2010
(51) Int. Cl.: B01D 46/24, F01N 3/022

(54) **Honeycomb structured body**
Wabenstrukturkörper
Corps structuré en nid d'abeille

(30) Priority: 23.03.2010 WO PCT/JP2010/054959
(43) Date of publication of application: 28.09.2011
(73) Proprietor: Ibiden Co., Ltd., Ogaki-shi Gifu 503-8604 (JP)
(72) Inventor: Saito, Sho, GIFU 501-0695 (JP); Naruse, Kazuya, GIFU 501-0695 (JP); Shibata, Toshiaki, GIFU 501-0695 (JP)
(74) Representative: HOFFMANN EITLE

(56) References cited:
- EP-A2- 2 070 579
- JP-A- 2004 154 718

## Description

### TECHNICAL FIELD

The present invention relates to a honeycomb structured body.

### BACKGROUND ART

It has been a problem recently that particulates (hereinafter also referred to as PMs) such as soot and other harmful substances contained in the exhaust gases discharged from internal combustion engines of vehicles such as buses and trucks, construction machines, and the like cause damage to environment and human bodies. To overcome such a problem, various honeycomb structured bodies containing porous ceramics have been proposed as honeycomb filters configured to capture PMs in exhaust gases to purify exhaust gases.

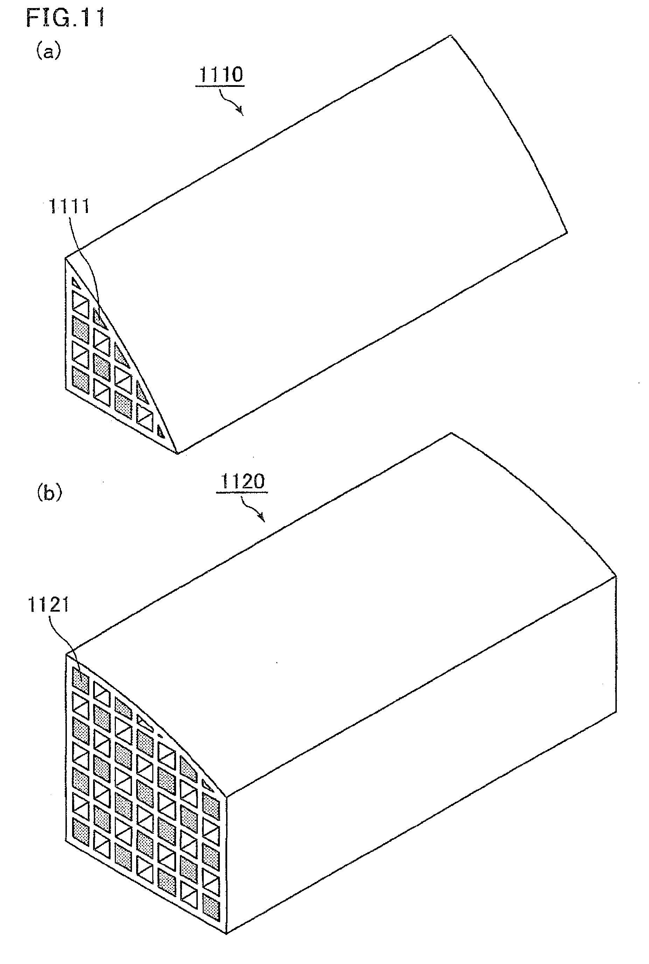

Those honeycomb structured bodies, including the honeycomb structured body disclosed by Patent Document 1, are conventionally known to have a ceramic block in which a plurality of honeycomb fired bodies each having a large number of cells therein are bonded together. Figs. 11(a) and 11(b) each schematically illustrate an example of a honeycomb fired body (outer honeycomb fired body) located in the outermost periphery of the conventional honeycomb structured body described in Patent Document 1, among honeycomb fired bodies used in production of the honeycomb structured body. In a honeycomb fired body 1110 and a honeycomb fired body 1120 which are respectively illustrated in Fig. 11(a) and Fig. 11(b), a cell 1111 and a cell 1121 (deformed small cells) closest to the curved surface constituting the peripheral face of the ceramic block each have, in a cross section perpendicular to the longitudinal direction thereof, an almost triangular or almost trapezoidal shape unlike the cells located thereunder (hereinafter, such a shape in a cross section is also referred simply to as a cross-sectional shape). Here, one side of each of the cell 1111 and the cell 1121 is formed along the above curved surface.

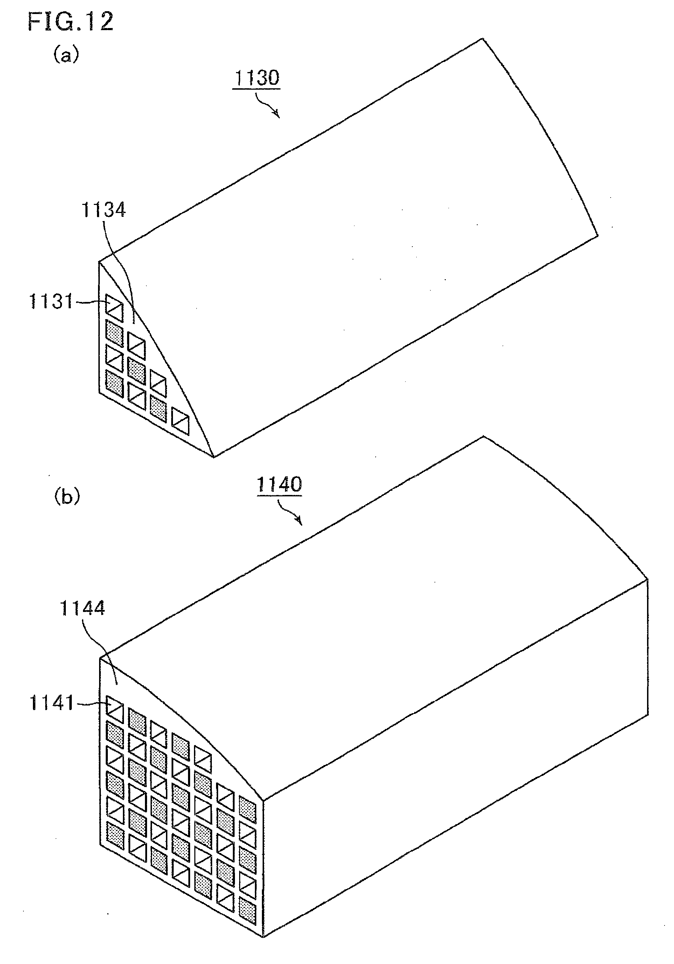

Patent Document 1 also discloses a honeycomb structured body in which cells are not formed near a fired-body peripheral wall constituting the periphery of the ceramic block among fired-body peripheral walls of honeycomb fired bodies such that filling with a plug material paste is facilitated. Fig. 12 (a) and Fig. 12(b) each illustrate an example of a conventional honeycomb fired body in which cells are not formed near a fired-body peripheral wall constituting the periphery of the ceramic block (hereinafter also referred to as a block peripheral wall). A honeycomb fired body 1130 and a honeycomb fired body 1140 have the same shape as the respective honeycomb fired body 1110 and honeycomb fired body 1120 illustrated in Fig. 11(a) and Fig. 11(b). Here, every cell 1131 in the honeycomb fired body 1130 and every cell 1141 in the honeycomb fired body 1140 have an almost square cross-sectional shape, and no cell is formed near block peripheral walls 1134 and 1144.

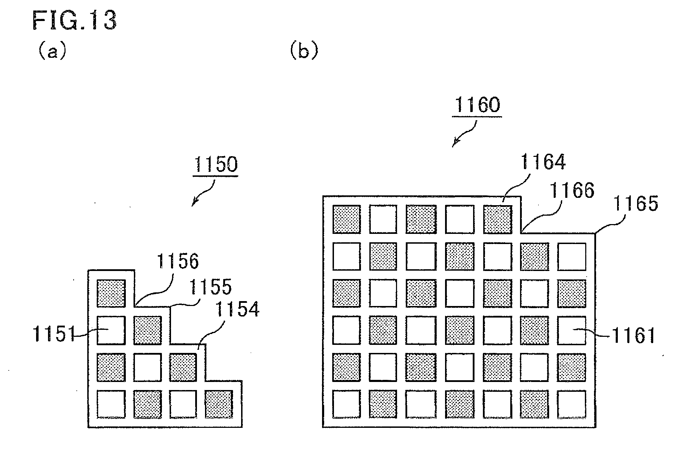

Meanwhile, Patent Document 2 discloses a honeycomb structured body in which each cell, in contact with the block peripheral wall constituting the periphery of the ceramic block (hereinafter, such a cell is also referred to as a "cell located in the outermost periphery") among the fired-body peripheral walls in the honeycomb fired bodies, is designed to have the same cross-sectional shape as the cells located in portions other than the outermost periphery such that filling with a plug material paste is facilitated. Fig. 13 (a) and Fig. 13 (b) each illustrate an example of a conventional honeycomb fired body in which cells located in the outermost periphery are designed to have the same cross-sectional shape as the cells located in portions other than the outermost periphery. Every cell 1151 in a honeycomb fired body 1150 and every cell 1161 in a honeycomb fired body 1160 have an almost square cross-sectional shape, and the cells 1151 or the cells 1161 are designed to be located at equal intervals. In order to provide the same cross-sectional shape to the cells located in the outermost periphery and the cells located in portions other than the outermost periphery, a fired-body peripheral wall 1154 of the honeycomb fired body 1150 and a fired-body peripheral wall 1164 of the honeycomb fired body 1160 are designed to have irregularities corresponding to the positions of the cells 1151 and the cells 1161 located in the respective outermost peripheries.
Patent Document 1: JP-A 2004-154718
Patent Document 2: WO 2008/126335 Al

### DISCLOSURE OF THE INVENTION

### PROBLEMS TO BE SOLVED BY THE INVENTION

In a sealing process of the cells 1111 of the honeycomb fired body 1110 and the cells 1121 of the honeycomb fired body 1120 which constitute the conventional honeycomb structured body of Patent Document 1, filling with a plug material paste may be difficult and the plug material paste may be easily leaked or overflowing, and this may lead to insufficient sealing of the cells.

If a honeycomb structured body having such a honeycomb fired body with the insufficiently sealed cells is used as an exhaust gas purifying filter, exhaust gases having flowed into the honeycomb structured body may flow out of the same cell without passing through the cell wall, which means that the honeycomb structured body does not function as a filter.

A conventional honeycomb structured body formed from honeycomb fired bodies illustrated in Figs. 12 (a) and 12 (b) do not have cells having small aperture areas which, in a conventional honeycomb structured body, cause a difficulty in filling with a plug material paste. This structure facilitates filling with a plug material paste, thereby improving the manufacturing efficiency of honeycomb structured bodies.

Such a conventional honeycomb structured body, however, has a problem that the aperture ratio (opening ratio) of the whole honeycomb structured body is low and the honeycomb structured body therefore cannot sufficiently capture PMs compared to the conventional honeycomb structured body having illustrated in Fig. 11(a) and Fig. 11(b).

The conventional honeycomb structured body formed from the honeycomb fired bodies illustrated in Figs. 12 (a) and 12 (b) has the same aperture area for the outermost periphery cells, which have small aperture areas in a conventional honeycomb structured body and bring difficulty in filling with a plug material paste, and for the cells other than the outermost periphery cells. This structure facilitates filling with a plug material paste and improves a manufacturing efficiency of honeycomb structured bodies. However, such a conventional honeycomb structured body has problem that the aperture ratio of the honeycomb structured body is low and the honeycomb structured body cannot sufficiently capture PMs compared to the conventional honeycomb structured body illustrated in Fig. 11(a) and Fig. 11(b).

Each honeycomb fired body constituting the conventional honeycomb structured body according to Patent Document 2 has an irregularity on the peripheral wall thereof. More specifically, the honeycomb fired body has an irregularity due to a projected portion 1155 and a recessed portion 1156 or an irregularity due to a projected portion 1165 and a recessed portion 1166, as illustrated in Fig. 13(a) and Fig. 13(b).
A honeycomb fired body having such a structure is also formed by extrusion-molding a wet mixture into a honeycomb molded body. The honeycomb molded body may have molding defects that a projected portion on the peripheral wall of the honeycomb molded body chips when coming into contact with a jig or the like, or a depressed portion has cracks occurred therein due to expansion and contraction of the honeycomb molded body and the honeycomb fired body, in processes such as a drying process, a firing process, and an assembling process of a honeycomb structured body after the extrusion-molding. The molding defects decrease the manufacturing efficiency of honeycomb structured bodies.

Also, if a honeycomb structured body is manufactured using such a honeycomb fired body, the manufactured honeycomb structured body still has projected portions and recessed portions on the periphery thereof. For this reason, the honeycomb structured body, when used as a honeycomb filter and exposed to high temperatures, may easily have defects such as chipped portions or cracks on the periphery thereof because of expansion and contraction of the honeycomb fired bodies.

The present invention has been made in order to solve the above problems, and aims to provide a honeycomb structured body that facilitates filling with a plug material paste for sealing cells, and that is less likely to cause defects such as chipping, and has a high aperture ratio.

### MEANS FOR SOLVING THE PROBLEMS

In order to achieve the above aim, the honeycomb structured body according to claim 1 comprises a ceramic block,
the ceramic block including a honeycomb fired body that has a peripheral wall constituting a periphery of the honeycomb fired body and has a plurality of cells longitudinally disposed in parallel with one another with a cell wall interposed between the cells,
wherein the cells comprise:
peripheral cells in contact with a peripheral wall of the honeycomb fired body constituting a periphery of the ceramic block; and
basic cells residing under the peripheral cells,
the peripheral cells comprise deformed cells each having a different shape from the basic cells in a cross section perpendicular to the longitudinal direction of the honeycomb fired body, and
each of the deformed cells is capable of receiving therein a circle of 0.90 mm in diameter, in a cross section perpendicular to the longitudinal direction.

In the honeycomb structured body according to claim 1, in particular the peripheral cells include deformed cells each having a different shape from the basic cells in a cross section perpendicular to the longitudinal direction, and each of the deformed cells is capable of receiving therein a circle of 0.90 mm in diameter, in a cross section perpendicular to the longitudinal direction.

Conventionally, peripheral cells in outer honeycomb fired bodies (conventional honeycomb fired bodies) include a deformed small cell incapable of receiving therein a circle of 0.90 mm in diameter and thereby having a small aperture area. This structure may make it difficult to fill the deformed small cell with a plug paste material or easily cause leakage or overflow of the plug material, thereby causing insufficient sealing of cells.

However, in the honeycomb structured body according to claim 1, every deformed cell is capable of receiving therein a circle of 0.90 mn in diameter and thereby has a comparatively large aperture area, and all the other cells are basic cells. The honeycomb structured body therefore facilitates filling with a plug material paste, is less likely to cause leakage or overflow of the plug material, thereby enabling excellent sealing of the deformed cells. Accordingly, defective cells not performing the functions of a honeycomb filter, such as capturing of PMs, are less likely to be formed, and the honeycomb structured body of the present invention can excellently perform the functions required for a honeycomb structured body used as a honeycomb filter, such as capturing of PMs.

Further, in the honeycomb structured body according to claim 1, not every deformed cell is filled, and deformed cells capable of receiving therein a circle of 0.90 mm in diameter in a cross section perpendicular to the longitudinal direction function as a part of the filter. Hence, the aperture ratio of the whole honeycomb structured body can be maintained high and PMs can be sufficiently captured.

Also, since the honeycomb structured body according to claim 1 has the deformed cells on the periphery of the ceramic block (honeycomb fired body), a projected portion on the periphery of the ceramic block (honeycomb fired body) has a gentle slope compared to the case where all the peripheral cells are basic cells. With this structure, stress concentration is less likely to occur when the honeycomb structured body is exposed to high temperatures, and thus chipping of the projected portion is less likely to occur.

Each of the above deformation cells is preferably incapable of receiving therein a circle of 1.57 mm in diameter in a cross section perpendicular to the longitudinal direction. A deformed cell capable of receiving therein a 1.57-mm circle has a very large cell cross section, which may lead to insufficient mechanical strength.

A cell wall of a honeycomb fired body herein refers to a portion that exists between two cells and separates the two cells. A peripheral wall of a honeycomb fired body herein refers to a wall portion that constitutes the periphery of the honeycomb fired body.

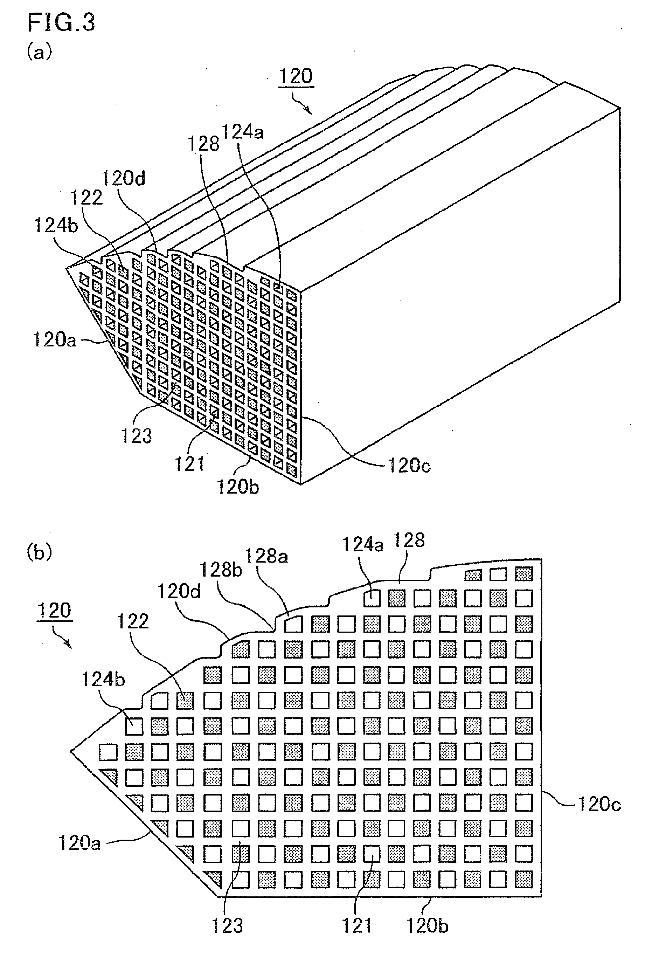

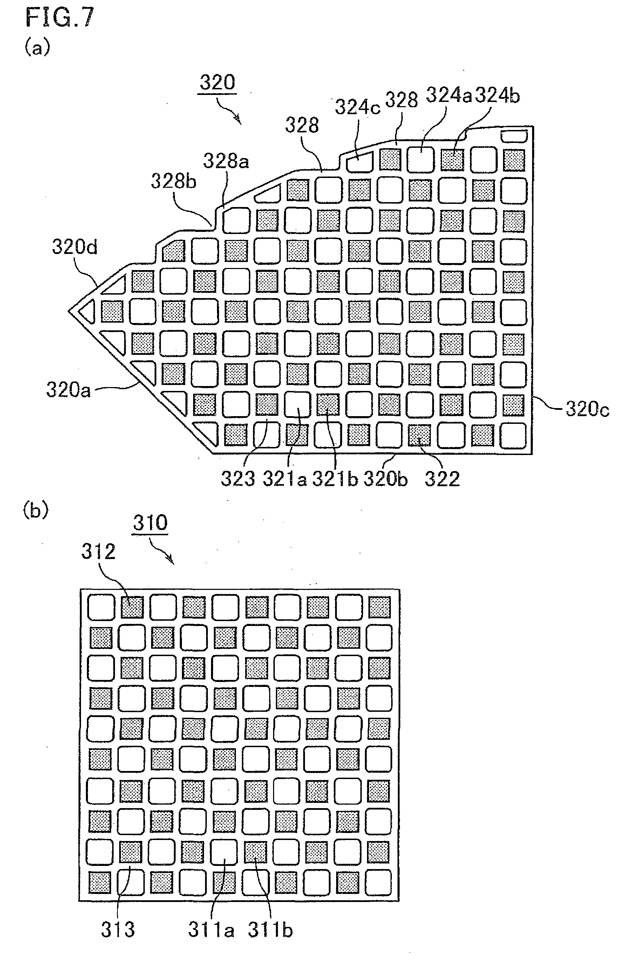

Basic cells herein refer to the smallest unit of cells having the same shape or different shapes which are repeatedly formed vertically and horizontally when the cells constituting a honeycomb fired body are observed in a cross section perpendicular to the longitudinal direction. For example, an outer honeycomb fired body 120 illustrated in Fig. 3 (a) and Fig. 3(b) has almost square cells repeatedly arranged in a cross section perpendicular to the longitudinal direction of the outer honeycomb fired body. In this case, the approximate square cells are the basic cells. Also, in an inner honeycomb fired body 310 illustrated in Fig. 7(b), for example, two kinds of cells having different cell cross-sectional areas are repeatedly arranged. In this case, the cells having different cell cross-sectional areas in combination are the basic cells. Note that only one of the cells having different cell cross-sectional areas may be referred to as a basic cell for convenience. A basic formation pattern herein refers to the shape of the basic cell.

A deformed cell herein refers to a kind of a peripheral cell that is in contact with the peripheral wall of an outer honeycomb fired body, and has a shape lacking a part of the shape of a basic cell and a smaller cell cross-sectional area than the basic cell, when observed in a cross section perpendicular to the longitudinal direction of cells constituting the outer honeycomb fired body. In the case that the basic cells correspond to the cells having the same shape, a cell having a smaller cross-sectional area than the basic cells is referred to as a deformed cell. In the case that the basic cells correspond to the cells having different cell cross-sectional areas arranged in a pattern in which those cells in combination are repeatedly arranged in an outer honeycomb fired body, for example, a cell having a smaller cell cross-sectional area than the cell having a comparatively large cell cross-sectional area in the above pattern, or a cell having a smaller cell cross-sectional area than the cell having a comparatively small cell cross-sectional area in the above pattern is referred to as a deformed cell. A deformed cell is also referred to as an incomplete cell.

In the honeycomb structured body according to claim 2, each of the deformed cells is capable of receiving therein a circle of 0.95 mm in diameter, in a cross section perpendicular to the longitudinal direction.

In the honeycomb structured body according to claim 2, a deformed cell is capable of receiving therein a circle of 0.95 mm in diameter in a cross-sectional perpendicular to the longitudinal direction and has a larger aperture area. A deformed cell therefore can be sealed better and perform the functions such as capturing of PMs which are required for a honeycomb structured body used as a honeycomb filter.
In the honeycomb structured body according to claim 2, the aperture ratio of the whole honeycomb structured body can be maintained higher, which enables sufficient capturing of PMs.
In the honeycomb structured body according to claim 2, a projected portion on the periphery of the ceramic block (honeycomb fired body) has a gentle slope compared to the case where all the peripheral cells are basic cells. With this structure, stress concentration is less likely to occur when the honeycomb structured body is exposed to high temperatures, and thus chipping of the projected portion is less likely to occur.

In the honeycomb structured body according to claim 3, in particular the cells further comprise a deformed small cell incapable of receiving therein a circle of 0.90 mm in diameter, and
the peripheral wall constituting the periphery of the ceramic block comprises a peripheral wall formed by completely filling the deformed small cell with the same material as the material of the cell walls.

Since the deformed small cell is completely filled in manufacture of a honeycomb molded body in the honeycomb structured body according to claim 3, filling with a plug material paste is not required, and thus filling defects in the deformed small cell can be prevented.

In the honeycomb structured body according to claim 4, the ceramic block is formed by bonding a plurality of honeycomb fired bodies by interposing adhesive layers.

Even in the case that a ceramic block is formed by bonding a plurality of honeycomb fired bodies by interposing adhesive layers as described above, the honeycomb structured body has deformed cells each being capable of receiving therein a circle of 0.90 mm in diameter in a cross section perpendicular to the longitudinal direction, and thereby achieves the same effects as the invention according to claim 1.

The honeycomb structured body according to claim 5 achieves the same effects as the invention according to claim 1 because the ceramic block is formed by combining the honeycomb fired bodies having different shapes from each other, and comprises:
outer honeycomb fired bodies each having a peripheral wall constituting the periphery of the ceramic block; and
inner honeycomb fired bodies located under the outer honeycomb fired bodies.

In the honeycomb structured body according to claim 6, the peripheral wall of the honeycomb fired body constituting the periphery of the ceramic block has an irregularity comprising a projected portion and a recessed portion, in a cross section perpendicular to the longitudinal direction,
the projected portion has a shape defined by a curved line formed by chamfering the projected portion, and
the recessed portion has a shape defined by a curved line formed by chamfering the recessed portion.
In the honeycomb structured body according to claim 6, stress concentration is less likely to occur when the honeycomb structured body is exposed to high temperatures and stress generated can be relieved, whereby chipping of the projected portion and cracks in the recessed portion can be effectively prevented.

Chamfering of a projected portion of a peripheral wall of an outer honeycomb fired body herein refers to the state where the projected portion has a shape formed by cutting the corners of the peripheral wall. Meanwhile, chamfering of a recessed portion of a peripheral wall of an outer honeycomb fired body herein refers to the state where the recessed portion has a shape formed by filling corners of the peripheral wall such that recessed portion has the same shape as the shape formed by supposedly chamfering the corners of the peripheral wall. For example, if a recessed portion has the same shape as the shape formed by supposedly chamfering (C-chamfering) or round-chamfering (R-chamfering) the peripheral wall of an outer honeycomb fired body, the recessed portion is C-chamfered or R-chamfered.

In the honeycomb structured body according to claim 7, the projected portion has a shape formed by R-chamfering the projected portion,
the recessed portion has a shape formed by R-chamfering the recessed portion, and
a curvature radius for the R-chamfering is 0.3 to 2.5 mm.
In the honeycomb structured body according to claim 7, stress concentration is less likely to occur when the honeycomb structured body is exposed to high temperatures and stress generated can be more effectively relieved, whereby defects such as cracks can be more effectively prevented. A curvature radius for the R-chamfering of less than 0.3 mm may make it difficult to more effectively relieve the stress generated by heat or the like. In contrast, a curvature radius for the R-chamfering of more than 2.5 mm may make it difficult to perform the processing of the R-chamfering.

In the honeycomb structured body according to claim 8, each of the basic cells and each of the peripheral cells excluding the deformed cells have an almost quadrangular shape in a cross section perpendicular to the longitudinal direction.

In the honeycomb structured body according to claim 9, the basic cells and the peripheral cells excluding the deformed cells comprise large-volume cells and small-volume cells, and
each of the large-volume cells has a larger area than the small-volume cells in a cross section perpendicular to the longitudinal direction.
When the honeycomb structured body according to claim 9 is used as a filter for purifying exhaust gases, a large amount of PMs can be captured.

In the honeycomb structured body according to claim 10, each of the large-volume cells and each of the small-volume cells have an almost quadrangular shape, in a cross section perpendicular to the longitudinal direction.

In the honeycomb structured body according to claim 11, each of the large-volume cells has an almost octagonal shape and each of the small-volume cells has an almost quadrangular shape, in a cross section perpendicular to the longitudinal direction.
Since each large-volume cell has an almost octagonal cross-sectional shape and each small-volume cell has an almost quadrangular cross-sectional shape, large-volume cells and small-volume cells are easily arranged with good symmetry. Such structure is less likely to cause distortion or the like to the cell walls, and therefore leads to a honeycomb structured body with excellent mechanical strength.

In the honeycomb structured body according to claim 12, each of the large-volume cells and each of the small-volume cells have a shape defined by a curved line, in a cross section perpendicular to the longitudinal direction.
Accordingly, stress concentration is less likely to occur in the cell walls, and thus cracks and the like are less likely to occur in the cell walls.

In the honeycomb structured body according to claim 13, the peripheral wall of the honeycomb fired body constituting the periphery of the ceramic block has a larger thickness than a cell wall located on an inner side of the honeycomb fired body.
In the honeycomb structured body according to claim 14, the peripheral wall of the honeycomb fired body constituting the periphery of the ceramic block has a thickness of 1.3 to 3.0 times the thickness of a cell wall located on an inner side of the honeycomb fired body.
In the honeycomb structured bodies according to claims 13 and 14, each peripheral wall has a larger thickness than the inner cell walls. Accordingly, the peripheral wall is less likely to be broken when a compression force or the like generates outside, and thus a honeycomb structured body with excellent mechanical strength is provided. A thickness of a peripheral wall of the honeycomb fired body constituting the periphery of less than 1.3 times the thickness of a cell wall located on an inner side of the honeycomb fired body may not improve the mechanical strength of the peripheral wall. In contrast, a thickness of a peripheral wall of the honeycomb fired body constituting the periphery of more than 3.0 times the thickness of a cell wall located on an inner side of the honeycomb fired body may be very large and thus may decrease the aperture ratio of the honeycomb structured body.

In the honeycomb structured body according to claim 15, each of the outer honeycomb fired bodies in a cross section is an approximate sector having a shape defined by three straight lines and a peripheral wall constituting a part of the periphery of the ceramic block in a cross section perpendicular to the longitudinal direction, and each of the inner honeycomb fired bodies is an approximate quadrangle unit that has an almost quadrangular shape in a cross section perpendicular to the longitudinal direction.
In the honeycomb structured body according to claim 15, honeycomb fired bodies each having an almost sector cross-sectional shape and honeycomb fired bodies each having an almost quadrangular cross-sectional shape are combined. With such a structure, a honeycomb structured body can be effectively formed from a small number of honeycomb fired bodies. Accordingly, honeycomb structured bodies are manufactured easily, and thereby the manufacturing cost is decreased.

In the honeycomb structured body according to claim 16, the cells are sealed at alternate ends. The above honeycomb structured body therefore functions as a filter.
In the honeycomb structured body according to claim 17, the ceramic block has a coat layer formed on the periphery thereof.

### BRIEF DESCRIPTION OF THE DRAWINGS

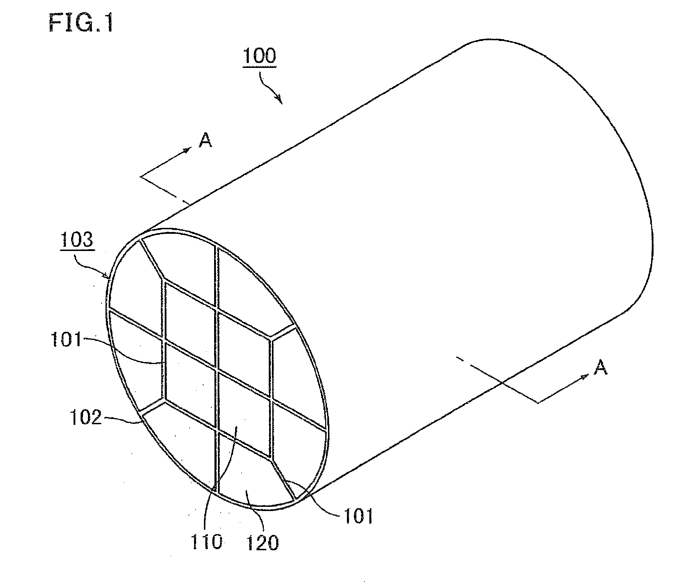

Fig. 1 is a perspective view schematically illustrating a honeycomb structured body according to a first embodiment of the present invention.

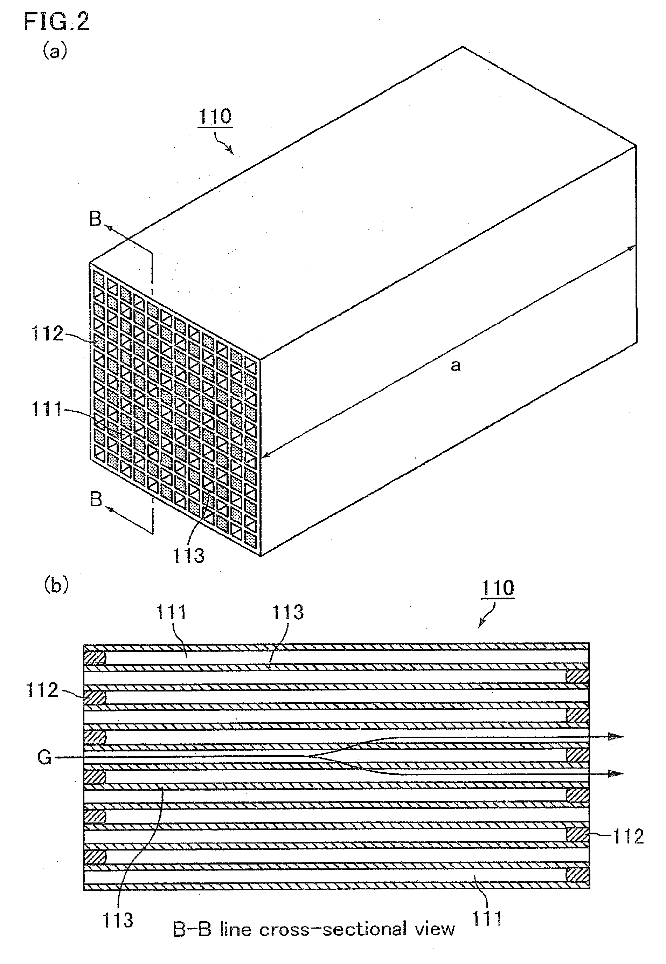

Fig. 2(a) is a perspective view schematically illustrating an inner honeycomb fired body of the honeycomb structured body according to the first embodiment of the present invention; and Fig. 2 (b) is a B-B line cross-sectional view of the inner honeycomb fired body illustrated in Fig. 2(a).
Fig. 3(a) is a perspective view schematically illustrating an example of an outer honeycomb fired body of the honeycomb structured body according to the first embodiment of the present invention; and Fig. 3 (b) is a cross-sectional view schematically illustrating a portion near an end of the outer honeycomb fired body illustrated in Fig. 3(a).

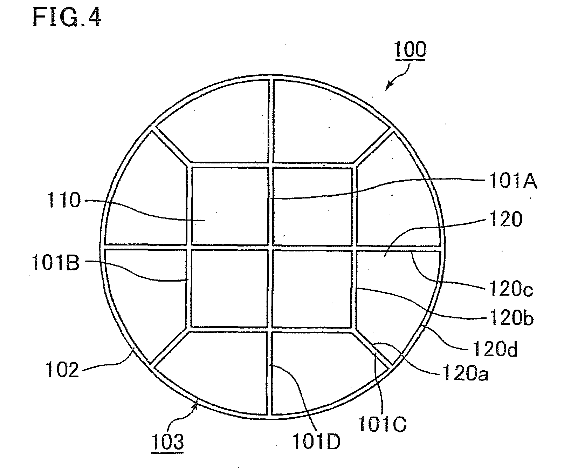

Fig. 4 is an A-A line cross-sectional view of the honeycomb structured body illustrated in Fig. 1.

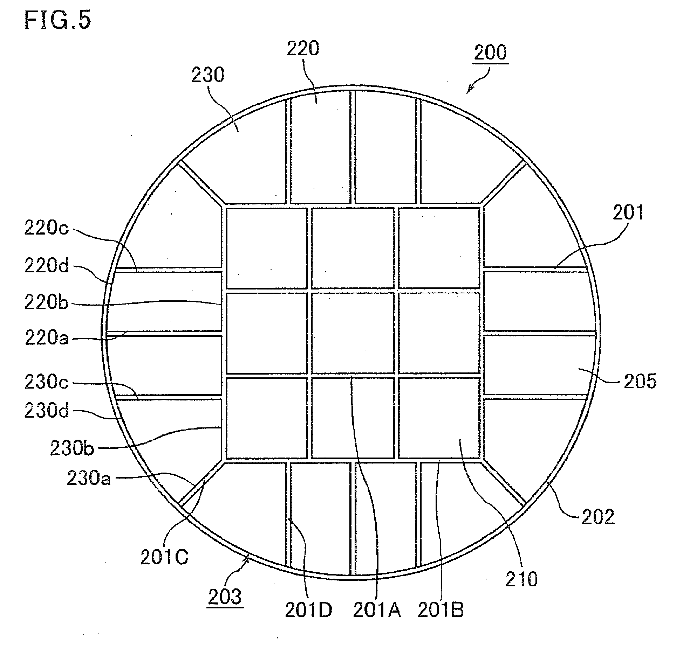

Fig. 5 is a cross-sectional view of a honeycomb structured body according to a second embodiment of the present invention.

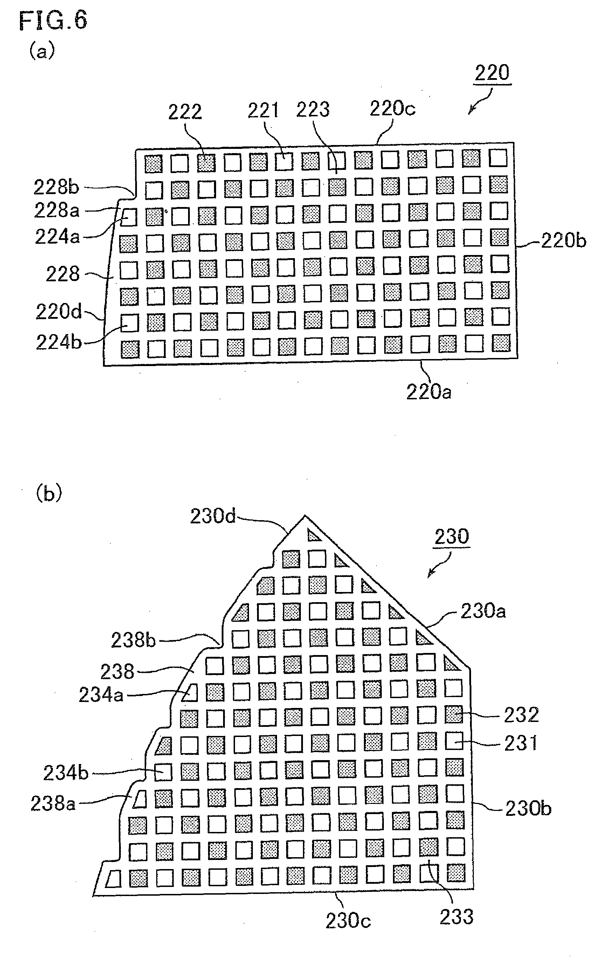

Fig. 6(a) is a cross-sectional view schematically illustrating a portion near an end of an outer honeycomb fired body constituting the honeycomb structured body according to the second embodiment of the present invention; and Fig. 6(b) is a cross-sectional view schematically illustrating a portion near an end of another outer honeycomb fired body constituting the honeycomb structured body according to the second embodiment of the present invention.
Fig. 7(a) is a cross-sectional view schematically illustrating a portion near an end of an outer honeycomb fired body constituting a honeycomb structured body according to a third embodiment of the present invention; and Fig. 7(b) is a cross-sectional view schematically illustrating a portion near an end of an inner honeycomb fired body constituting the honeycomb structured body according to the third embodiment of the present invention.

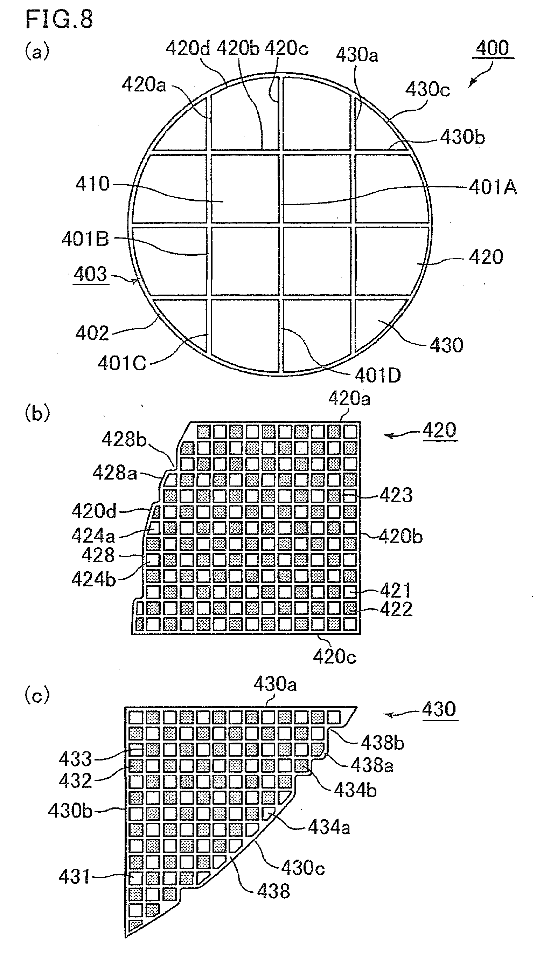

Fig. 8(a) is a cross-sectional view schematically illustrating a honeycomb structured body according to a fourth embodiment of the present invention; Fig. 8(b) is a cross-sectional view schematically illustrating a portion near an end of an outer honeycomb fired body constituting the honeycomb structured body illustrated in Fig. 8(a); and Fig. 8(c) is a cross-sectional view schematically illustrating a portion near an end of another outer honeycomb fired body constituting the honeycomb structured body illustrated in Fig. 8(a).

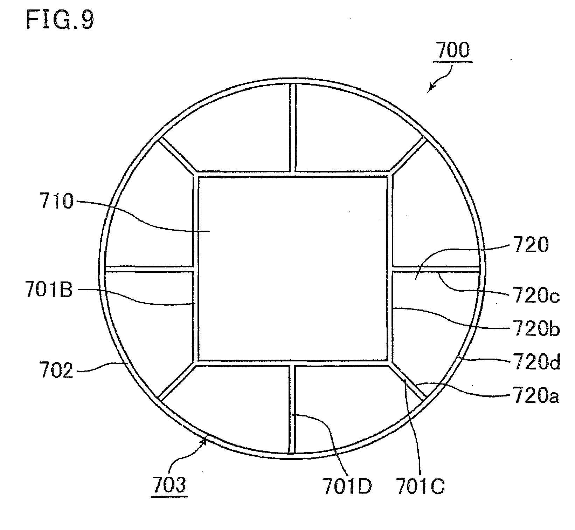

Fig. 9 is a cross-sectional view of a honeycomb structured body according to another embodiment of the present invention.

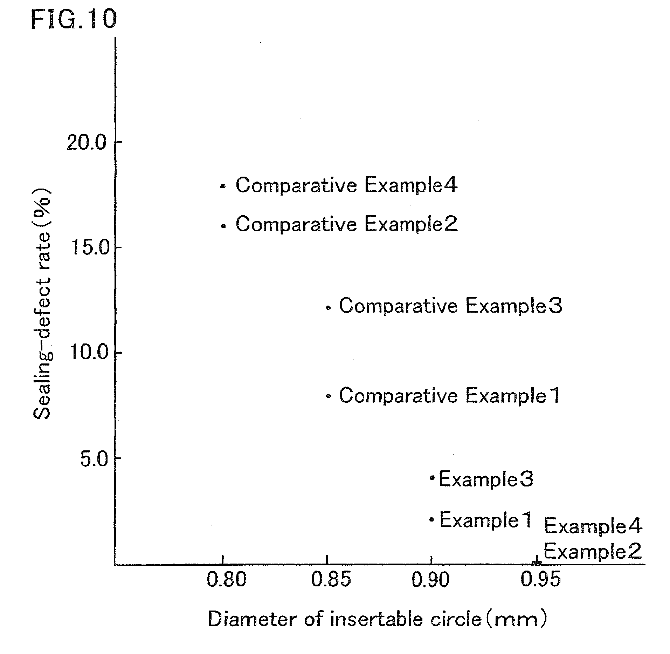

Fig. 10 is a graph showing the diameters of the insertable circles and the sealing-defect rates in Examples 1 to 4 and Comparative Examples 1 to 4.
Fig. 11(a) is a perspective view schematically illustrating one example of a honeycomb fired body constituting a conventional honeycomb structured body; and Fig. 11(b) is a perspective view schematically illustrating another example of a honeycomb fired body constituting the conventional honeycomb structured body.
Fig. 12(a) is a perspective view schematically illustrating one example of a honeycomb fired body constituting a conventional honeycomb structured body; and Fig. 12 (b) is a perspective view schematically illustrating another example of a honeycomb fired body constituting the conventional honeycomb structured body.
Fig. 13(a) is a perspective view schematically illustrating one example of a honeycomb fired body constituting a conventional honeycomb structured body; and Fig. 13(b) is a perspective view schematically illustrating another example of a honeycomb fired body constituting the conventional honeycomb structured body.

### BEST MODE FOR CARRYING OUT THE INVENTION

The honeycomb structured body of the present invention comprises a ceramic block, the ceramic block including a honeycomb fired body that has a peripheral wall formed around a periphery of the honeycomb fired body and has a plurality of cells longitudinally disposed in parallel with one another with a cell wall interposed between the cells,
wherein the cells comprise:
peripheral cells in contact with the peripheral wall constituting a periphery of the ceramic block; and
basic cells residing under the peripheral cells,
the peripheral cells comprise deformed cells each having a different shape from the basic cells in a cross section perpendicular to the longitudinal direction of the honeycomb fired body, and
each of the deformed cells is capable of receiving therein a circle of 0.90 mm in diameter, in a cross section perpendicular to the longitudinal direction.

The ceramic block is preferably formed by bonding a plurality of honeycomb fired bodies by interposing adhesive layers. Further, the ceramic block is preferably formed by combining the honeycomb fired bodies having different shapes from each other, and preferably comprises:
outer honeycomb fired bodies each having a peripheral wall constituting the periphery of the ceramic block; and
inner honeycomb fired bodies residing under the outer honeycomb fired bodies.
Hereinafter, specific embodiments of the honeycomb structured body will be described.

### (First embodiment)

A first embodiment of the honeycomb structured body of the present invention will be described with reference to the drawings.
A cross section of a honeycomb structured body, a cross section of a honeycomb fired body, and a cross section of a honeycomb molded body herein respectively refer to a cross section perpendicular to the longitudinal direction of the honeycomb structured body, a cross section perpendicular to the longitudinal direction of the honeycomb fired body, and a cross section perpendicular to the longitudinal direction of the honeycomb molded body. Across-sectional area of a honeycomb fired body herein refers to a cross-sectional area of a cross section perpendicular to the longitudinal direction of the honeycomb fired body.

Fig. 1 is a perspective view schematically illustrating a honeycomb structured body according to the first embodiment of the present invention. Fig. 2(a) is a perspective view schematically illustrating an inner honeycomb fired body constituting the honeycomb structured body according to the first embodiment of the present invention. Fig. 2 (b) is a B-B line cross-sectional view of the inner honeycomb fired body illustrated in Fig. 2(a). Fig. 3(a) is a perspective view schematically illustrating an outer honeycomb fired body constituting the honeycomb structured body according to the first embodiment of the present invention. Fig. 3(b) is a cross-sectional view schematically illustrating a portion near an end of the outer honeycomb fired body illustrated in Fig. 3(a). Fig. 4 is an A-A line cross-sectional view of the honeycomb structured body illustrated in Fig. 1.

A honeycomb structured body 100 illustrated in Fig. 1 and Fig. 4 has a ceramic block 103 formed by bonding, by interposing adhesive layers 101 (101A to 101D), eight outer honeycomb fired bodies 120 each having a shape illustrated in Figs. 3(a) and 3(b) and four inner honeycomb fired bodies 110 each having a shape illustrated in Figs. 2 (a) and 2 (b) located under the outer honeycomb fired bodies. The ceramic block 103 has a coat layer 102 formed around the periphery thereof.
Each inner honeycomb fired body 110 has an almost square cross-sectional shape.
Each outer honeycomb fired body 120 in a cross section is an approximate sector having a shape defined by three lines 120a, 120b, and 120c and one approximate circular arc 120d as illustrated in Fig. 4. Here, two angles each formed by two lines out of the three lines (the angle formed by the line 120b and the line 120c, and the angle formed by the line 120a and the line 120b) are 90° and 135°, respectively. The shape of the approximate circular arc will be described later.

In a peripheral portion in a cross section of the honeycomb structured body 100, an adhesive layer 101C provided from a corner of the central portion toward the periphery of the honeycomb structured body 100 and an adhesive layer 101D provided from a portion of the central portion, other than the corner, toward the periphery of the honeycomb structured body 100 form an angle of 45°.

An inner honeycomb fired body 110 illustrated in Figs. 2(a) and 2(b) has a large number of cells 111 longitudinally (in the direction of an arrow "a" in Fig. 2(a)) disposed in parallel with one another with cell walls 113 interposed therebetween, and the cells 111 are sealed with plugs 112 at alternate ends. Hence, exhaust gases G (see the arrow in Fig. 2(b)) having flowed into a cell 111 with one end open surely pass through the cell walls 113 separating the cells 111 before flowing out of other cells 111 with the other ends open. The cell walls 113 therefore function as filters for capturing PMs.

Similarly to the inner honeycomb fired body 110, an outer honeycomb fired body 120 illustrated in Figs. 3 (a) and 3 (b) has a large number of cells 121 longitudinally disposed in parallel with one another with cell walls 123 interposed therebetween, and the cells 121 are sealed with plugs 122 at alternate ends. Hence, exhaust gases having flowed into a cell 121 with one end open surely pass through the cell walls 123 separating the cells 121 before flowing out of other cells 121 with the other ends open.
That is, although the outer honeycomb fired body 120 differs in the appearance from the inner honeycomb fired body 110, the function of the outer honeycomb fired body 120 is the same as that of the inner honeycomb fired body 110.

As illustrated in Figs. 3 (a) and 3 (b), the outer honeycomb fired body 120 has a peripheral wall 128 constituting the periphery of the ceramic block 103. The cells 121 and 124 (124a, 124b) of the outer honeycomb fired body 120 include peripheral cells 124a and 124b in contact with the peripheral wall 128 constituting the periphery of the ceramic block 103, and basic cells 121 located under the peripheral cells 124a and 124b. The peripheral cells 124a and 124b of the outer honeycomb fired body 120 include the basic cells 124b each having the same shape as the basic cells 121 and the deformed cells 124a each having a different shape from the basic cells 124b in a cross section perpendicular to the longitudinal direction. Each deformed cell 124a is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be a part of the peripheral wall 128 of the honeycomb fired body, or is removed to leave a recessed portion in a cross section.

A cell having a smaller size than the almost quadrangular (approximate square) shape of the inner cells (basic cells) in a cross section perpendicular to the longitudinal direction is referred to as a deformed cell. Here, the cross section of the cell may have a shape with right-angle corners, or may have a shape that the portion corresponding to a corner is a circular arc (a shape formed by supposedly R-chamfering a cell) or chamfered (a shape formed by supposedly C-chamfering a cell).

A cell incapable of receiving therein a circle of 0.90 mm in diameter may be filled with the same material as the material of the cell walls so as to be a part of the peripheral wall of the honeycomb fired body, or may be removed to leave a recessed portion in a cross section of a ceramic block perpendicular to the longitudinal direction of the cell. Alternatively, the above two structures may be employed together. A recessed portion in a cross section of a ceramic block perpendicular to the longitudinal direction of a cell may be simply referred to as a cross-sectional recessed portion.

A cell capable of receiving therein a circle of 0.90 mm in diameter may be determined by inserting a jig (for example, a metal stick, a ceramic stick) of 0.90 mm in diameter into an actual cell to see whether the jig is insertable into the cell or breaks (cracks, cleaves, or the like) the cell at the time of insertion, or by comparing the dimension of the cell in the design drawing and the dimension of an insertable circle. Determination is preferably made from a design drawing in terms of ease of determination and ease of the actual work.

If there is a deformed small cell having a small aperture area and incapable of receiving therein a circle of 0.90 mm in diameter, filling with a plug material paste may be difficult or leakage and overflow of the plug material may easily occur, which may lead to insufficient sealing of the cells.
However, in the honeycomb structured body 100 of the present e-mbodiment, every deformed cell 124a has a comparatively large aperture area and is capable of receiving therein a circle of 0.90 mm in diameter, and the other cells are the basic cells 121 and 124b. Accordingly, filling with a plug material paste is easy, leakage and overflow of the plug material are less likely to occur, and therefore the deformed cells can be well sealed.

Further, in the above, the peripheral wall 128 is described to have an almost circular arc shape in a cross section perpendicular to the longitudinal direction.
This means that the peripheral wall has an irregularity due to a projected portion 128a and a recessed portion 128b in a cross section perpendicular to the longitudinal direction of the honeycomb fired body, and the projected portion 128a and the recessed portion 128b each have a cross-sectional shape defined by a curved line formed by R-chamfering. The curvature radius for the R-chamfering is preferably 0.3 to 2.5 mm.

The honeycomb fired bodies 110 and 120 constituting the honeycomb structured body 100 are preferably porous bodies formed by silicon carbide or silicon-containing silicon carbide.

Next, the method of manufacturing the honeycomb structured body of the present embodiment is described. Here, a case is described in which silicon carbide powder is used as ceramic powder.
(1) A formation process of manufacturing a honeycomb molded body is performed by extrusion-molding a wet mixture that contains ceramic powder and a binder. Specifically, silicon carbide powders (as a ceramic powder) having different average particle sizes from each other, an organic binder, a liquid plasticizer, a lubricant, and water are mixed in a wet-mixing apparatus to prepare a wet mixture for manufacturing a honeycomb molded body.
Then, the above wet mixture is fed into an extrusion-molding apparatus. By feeding the wet mixture into the extrusion-molding apparatus to extrusion-mold the mixture in this way, a honeycomb molded body is manufactured which has a predetermined shape.

Here, in order to manufacture a honeycomb molded body having an almost square cross section or a honeycomb molded body having a cross-sectional shape defined by three lines and one circular arc with two angles of 90° and 135° each formed by two lines out of the three lines, extrusion-molding dies corresponding to the respective shapes are used.
(2) Next, the honeycomb molded body is cut to have a predetermined length, and dried by us ing a drying apparatus such as a microwave drying apparatus, a hot-air drying apparatus, a dielectric drying apparatus, a reduced-pressure drying apparatus, a vacuum drying apparatus, and a freeze drying apparatus. Thereafter, a sealing process is carried out in which predetermined cells each are filled with a plug material paste that is to be a plug. At this time, since a deformed cell is capable of receiving therein a circle of 0.90 mm in diameter, sealing operations can be performed well.
Here, those conditions conventionally used for manufacturing honeycomb fired bodies can be adopted as the conditions of the cutting process, the drying process, and the sealing process.
(3) The honeycomb molded bodies are then processed by a degreasing process which is for heating the organic substances of the honeycomb molded body in a degreasing furnace.
Then, the honeycomb molded body is transported to a firing furnace so as to be processed by a firing process, whereby a honeycomb fired body is manufactured.
Here, those conditions conventionally used for manufacturing honeycomb fired bodies can be adopted as the conditions of the degreasing process and the firing process.
Those processes enable manufacture of an inner honeycomb fired body and an outer honeycomb fired body.
(4) Subsequently, an adhesive paste is applied to predetermined sides of the inner honeycomb fired body and outer honeycomb fired body each having the predetermined end of each cell sealed therein such that an adhesive paste layer is formed. After that, another honeycomb fired body is successively stacked onto the adhesive layer. Repeating this process leads to manufacture of a ceramic block in which a predetermined number of honeycomb fired bodies are combined.
The adhesive paste used here contains, for example, an inorganic binder, an organic binder and inorganic particles. Moreover, the adhesive paste may further contain at least one of inorganic fibers and whiskers.
(5) A coat layer forming process is further carried out in which a coating material paste is applied to the periphery of the almost round-pillar shaped ceramic block, and is dried and solidified into a coat layer.
The coating material paste used here is the same paste as the adhesive paste. Alternatively, a coating material paste having a different composition from the adhesive paste may be used.
Here, a coat layer is not necessarily provided, and may be provided according to need.
The above processes enable manufacture of the honeycomb structured body of the present embodiment.

Hereinafter, the effects of the honeycomb structured body according to the present embodiment will be listed.
(1) In the honeycomb structured body of the present embodiment, the peripheral cells of the outer honeycomb fired body include deformed cells each having a different shape from the basic cells in a cross section perpendicular to the longitudinal direction, and each of the deformed cells is capable of receiving therein a circle of 0.90 mm in diameter, in a cross section perpendicular to the longitudinal direction.
The honeycomb structured body therefore facilitates filling with a plug material paste, is less likely to cause leakage or overflow of the plug material, thereby enabling excellent sealing of the deformed cells.
Further, in the honeycomb structured body of the present embodiment, the deformed cells are neither entirely removed nor filled with the same material as the material of the cell walls. That is, the deformed cells function as a part of the filter. Hence, the aperture ratio of the whole honeycomb structured body can be maintained high and PMs can be sufficiently captured.
(2) Since the honeycomb structured body of the present embodiment has the deformed cells on the periphery of the ceramic block, a projected portion on the periphery of the ceramic block has a gentle slope compared to the case where all the peripheral cells are basic cells. With this structure, chipping of the projected portion is less likely to be caused by stress concentration which occurs when the honeycomb structured body is brought into contact with a jig or the like or exposed to high temperatures.
(3) In the honeycomb fired body of the present embodiment, cells are sealed with plugs at alternate ends. The honeycomb structured body of the present embodiment can therefore be suitably used as a diesel particulate filter.
(4) In the honeycomb structured body of the present embodiment, the peripheral wall has an irregularity due to a projected portion and a recessed portion in a cross section perpendicular to the longitudinal direction, and the projected portion and the recessed portion each have a cross-sectional shape defined by a curved line formed by respectively R-chamfering the projected portion and the recessed portion. Accordingly, stress concentration is less likely to occur when the honeycomb structured body is brought into contact with a jig or the like or exposed to high temperatures, and stress generated by heat or the like can be relieved, whereby chipping of the projected portion and cracks in the recessed portion can be effectively prevented.

Hereinafter, Examples are shown which more specifically disclose the first embodiment of the present invention. The present invention is not limited to those Examples.

### (Example 1)

(1) An amount of 52.8% by weight of a silicon carbide coarse powder having an average particle diameter of 22 µm and 22.6% by weight of a silicon carbide fine powder having an average particle diameter of 0.5 µm were mixed. To the resulting mixture, 2.1% by weight of an acrylic resin, 4.6% by weight of an organic binder (methylcellulose), 2.8% by weight of a lubricant (UNILUB, manufactured by NOF Corporation), 1.3% by weight of glycerin, and 13.8% by weight of water were added, and then the wet mixture was extrusion-molded in a molding process.
In this molding process, the following honeycomb molded bodies were manufactured: a raw honeycomb molded body which had approximately the same shape as the inner honeycomb fired body 110 illustrated in Figs. 2(a) and 2(b), and had the cells not sealed; and a raw honeycomb molded body which had approximately the same shape as the outer honeycomb fired body 120 illustrated in Figs. 3(a) and 3(b), and had the cells not sealed.
(2) Next, the raw honeycomb molded bodies were dried by using a microwave drying apparatus to have dried honeycomb molded bodies. Then, a filling process of filling a paste having the same composition as the above wet mixture into predetermined cells was performed, and after that, the honeycomb molded bodies were dried again by using a drying apparatus.
(3) The dried honeycomb molded bodies were degreased at 400°C, and then fired at 2200°C under ordinary pressure argon atmosphere for three hours.

Thereby, an inner honeycomb fired body 110 was manufactured which was made of a porous silicon carbide sintered body having a porosity of 45%, an average pore diameter of 15 µm, a size of 34.5 mm x 34.5 mm x 150 mm, the number of cells (cell density) of 300 pcs/inch², a cell wall thickness of 0.25 mm (10 mil), and a cell width of 1.42 mm. Also, an outer honeycomb fired body 120 was manufactured which had the same porosity, average pore diameter, the number of cells (cell density), cell wall thickness, and cell width as the inner honeycomb fired body 110, and had a cross-sectional shape defined by three lines and one approximate circular arc with two angles of 90° and 135° each formed by two lines out of the three lines (line 120a = 20.8 mm, line 120b = 35.0 mm, line 120c = 35.7 mm) . Here, the deformed cell 124a is capable of receiving therein a circle of 0.90 mm in diameter in a cross section perpendicular to the longitudinal direction. Portions to be cells incapable of receiving therein a circle of 0.90 mm in diameter are filled in advance with a wet mixture so as to be a part of the peripheral wall of the honeycomb fired body, or are removed to leave cross-sectional recessed portions.
(4) An adhesive paste was applied to predetermined sides of the inner honeycomb fired bodies 110 and outer honeycomb fired bodies 120. By interposing the adhesive paste, four inner honeycomb fired bodies 110 and eight outer honeycomb fired bodies 120 were bonded in the arrangement illustrated in Fig. 1. Then, the adhesive paste was heated at 180°C for 20 minutes to be solidified. As a result, a round pillar-shaped ceramic block 103 with 1-mm-thick adhesive layers was manufactured.
Here, an adhesive paste was used which contained 30.0% by weight of silicon carbide particles having an average particle diameter of 0.6 µm, 21.4% by weight of silica sol (solid content of 30% by weight), 8.0% by weight of carboxymethyl cellulose, and 40.6% by weight of water.
(5) By using the adhesive paste used in the above process (4), a coating material paste layer was formed around the periphery of the ceramic block 103. Thereafter, the coating material paste layer was dried at 120°C, so that a 143.8 mm (diameter) x 150 mm (length) round pillar-shaped honeycomb structured body 100 having a coat layer 102 formed on the periphery thereof was manufactured.

### (Example 2)

A honeycomb structured body was manufactured by the same procedure as that in Example 1, except that in manufacture of the outer honeycomb fired bodies 120, honeycomb molded bodies for the outer honeycomb fired bodies 120 were manufactured with extrusion-molding dies having different shapes such that the deformed cells 124a were formed to be capable of receiving a circle of 0.95 mm in diameter in a cross section perpendicular to the longitudinal direction, and every cell incapable of receiving therein a circle of 0.95 mm in diameter was filled with a wet mixture so as to be a part of the peripheral wall of the fired body or was removed to leave a across-sectional recessed portion.

### (Comparative Example 1)

A honeycomb structured body was manufactured by the same procedure as that in Example 1, except that in manufacture of the outer honeycomb fired bodies 120, honeycomb molded bodies for the outer honeycomb fired bodies 120 were manufactured with extrusion-molding dies having different shapes such that the deformed cells 124a were formed to be capable of receiving a circle of 0.85 mm in diameter in a cross section perpendicular to the longitudinal direction, and every cell incapable of receiving therein a circle of 0.85 mm in diameter was filled with a wet mixture so as to be a part of the peripheral wall of the fired body or was removed to leave a cross-sectional recessed portion.

### (Comparative Example 2)

A honeycomb structured body was manufactured by the same procedure as that in Example 1, except that in manufacture of the outer honeycomb fired bodies 120, honeycomb molded bodies for the outer honeycomb fired bodies 120 were manufactured with extrusion-molding dies having different shapes such that the deformed cells 124a were formed to be capable of receiving a circle of 0.80 mm in diameter in a cross section perpendicular to the longitudinal direction, and every cell incapable of receiving therein a circle of 0.80 mm in diameter was filled with a wet mixture so as to be a part of the peripheral wall of the fired body or was removed to leave a cross-sectional recessed portion.

### (Evaluation of sealing defects)

A light leakage test was conducted using 50 outer honeycomb fired body pieces manufactured in Examples and Comparative Examples. In the light leakage test, light is applied to the cell openings with a light leakage tester and whether the light leaks out of the sealed openings is checked. If even one of the cells in one outer honeycomb fired body leaked light, the outer honeycomb fired body was determined as defective and the sealing-defect rate thereof was calculated. Table 1 and Fig. 10 show the results.

**[Table 1]**

| | Shape of honeycomb fired body | Diameter of insertable circle (mm) | The number of sealing defects | Sealing-defect rate [%] |
|---|---|---|---|---|
| Example 1 | Fig. 3 | 0.90 | 1 | 2 |
| Example 2 | Fig. 3 | 0.95 | 0 | 0 |
| Comparative Example 1 | Fig. 3 | 0.85 | 4 | 8 |
| Comparative Example 2 | Fig. 3 | 0.80 | 8 | 16 |

As shown by the results in Table 1, the cell sealing-defect rate was 0% in Example 2 whereas the cell sealing-defect rate was 2% in Example 1, showing existence of a few defectively sealed cells. Still, the above sealing-defect rate was acceptable.
In contrast, in Comparative Examples 1 and 2, the respective cell sealing-defect rates greatly increased to 8% and 16%.

### (Second Embodiment)

Hereinafter, a second embodiment, which is another embodiment of the honeycomb structured body of the present invention, will be described with reference to the drawings.
Fig. 5 is a cross-sectional view of a honeycomb structured body according to a second embodiment of the present invention. Fig. 6(b) is a cross-sectional view schematically illustrating a portion near an end of an outer honeycomb fired body 220 constituting a honeycomb structured body; and Fig. 6(b) is a cross-sectional view schematically illustrating a portion near an end of an outer honeycomb fired body 230 constituting the honeycomb structured body.

A honeycomb structured body 200 of the present embodiment has, as illustrated in Fig. 5, a ceramic block 203 formed by bonding, by interposing adhesive layers 201A to 201D, eight outer honeycomb fired bodies 220, eight outer honeycomb fired bodies 230, and nine inner honeycomb fired bodies 210 located under the outer honeycomb fired bodies. The ceramic block 203 has a coat layer 202 formed around the periphery thereof.
Each inner honeycomb fired body 210 has an almost square cross-sectional shape.
Each outer honeycomb fired body 220 has a cross-sectional shape defined by three lines 220a, 220b, and 220c and one approximate circular arc 220d. Here, two angles each formed by two lines out of the three lines (the angle formed by the line 220a and the line 220b, and the angle formed by the line 220b and the line 220c) are both 90°.
Each outer honeycomb fired body 230 in a cross section is an approximate sector having a cross-sectional shape defined by three lines 230a, 230b, and 230c and one approximate circular arc 230d. Here, two angles each formed by two lines out of the three lines (the angle formed by the line 230b and the line 230c, and the angle formed by the line 230a and the line 230b) are 90° and 135°, respectively.
Each of the honeycomb fired bodies 210, 220, and 230 is preferably formed by a porous silicon carbide sintered body or porous silicon-containing silicon carbide.

As illustrated in Fig. 6(a), each of the eight outer honeycomb fired bodies 220 has a peripheral wall 228 constituting the periphery of the ceramic block 203, and the cells 221 and 224 (224a, 224b) of each outer honeycomb fired body 220 include peripheral cells 224a and 224b in contact with the peripheral wall 228 constituting the periphery of the ceramic block 203, and basic cells 221 located under the peripheral cells 224a and 224b. The peripheral cells 224a and 224b of the outer honeycomb fired body 220 include basic cells 224b each having the same shape as the basic cells 221 and deformed cells 224a each having a different shape from the basic cells 224b in a cross section perpendicular to the longitudinal direction. Each deformed cell 224a is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be a part of the peripheral wall 228 of the honeycomb fired body, or is removed to leave a cross-sectional recessed portion. Here, the symbol 222 refers to a plug.

Similarly to the outer honeycomb fired bodies 220, each of the eight outer honeycomb fired bodies 230 illustrated in Fig. 6(b) has a peripheral wall 238 constituting the periphery of the ceramic block 203, and the cells 231 and 234 (234a, 234b) of each outer honeycomb fired body 230 include peripheral cells 234a and 234b in contact with the peripheral wall 238 constituting the periphery of the ceramic block 203, and basic cells 231 located under the peripheral cells 234a and 234b. The peripheral cells 234a and 234b of the outer honeycomb fired body 230 include basic cells 234b each having the same shape as the basic cells 231 and deformed cells 234a each having a different shape from the basic cells 234b in a cross section perpendicular to the longitudinal direction. Each deformed cell 234a is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be a part of the peripheral wall 238 of the honeycomb fired body, or is removed to leave a cross-sectional recessed portion. Here, the symbol 232 refers to a plug.

The peripheral walls 228 and 238 have an irregularity due to respective projected portions 228a and 238a and respective recessed portions 228b and 238b in a cross section perpendicular to the longitudinal direction, and the projected portions 228a and 238a and the recessed portions 228b and 238b each have a cross-sectional shape defined by a curved line formed by R-chamfering. The curvature radius for the R-chamfering is 0.3 to 2.5 mm.
Also in this honeycomb structured body 200, the cells are sealed at alternate ends to function as filters for capturing PMs.

Next, the method of manufacturing the honeycomb structured body of the present embodiment is described.
The method of manufacturing a honeycomb structured body in the present embodiment is the same as the method of manufacturing a honeycomb structured body in the first embodiment of the present invention, except for the following points.
Firstly, each honeycomb molded body manufactured in the molding process (1) in the manufacturing method in the first embodiment of the present invention has approximately the same shape as the inner honeycomb fired body 210 illustrated in Fig. 5 or the outer honeycomb fired body 220 or 230 except that the cells are not sealed at alternate ends. Secondly, the honeycomb fired bodies are bonded in the bonding process (4) in the manufacturing method in the first embodiment such that the inner honeycomb fired bodies 210 and the outer honeycomb fired bodies 220 and 230 are located at the positions illustrated in Fig. 5.

The honeycomb structured body of the present embodiment can provide the same effects as the honeycomb structured body according to the first embodiment of the present invention.

Hereinafter, Examples are shown which more specifically disclose the second embodiment of the present invention. The present invention is not limited to those Examples.

### (Example 3)

(1) By the same method as the molding process (1) in Example 1, raw honeycomb molded bodies were manufactured which had approximately the same shape as the inner honeycomb fired bodies 210 illustrated in Fig. 5 or the outer honeycomb fired bodies 220 or 230 and had the cells not sealed.
(2) Next, the raw honeycomb molded bodies were dried using a microwave drying apparatus to provide dried bodies of the honeycomb molded bodies. Then, a paste having the same composition as the above wet mixture was filled into predetermined cells and the dried bodies were dried again using a drying apparatus.
(3) The dried honeycomb molded bodies were degreased at 400°C, and then fired at 2200°C under ordinary pressure argon atmosphere for three hours.

Thereby, the following honeycomb fired bodies were manufactured: inner honeycomb fired bodies 210 each made of a porous silicon carbide sintered body having a porosity of 45%, an average pore diameter of 15 µm, a size of 34.5 mn x 34.5 mm x 200 mm, the number of cells (cell density) of 300 pcs/inch², a cell wall thickness of 0.25 mm (10 mil), and a cell width of 1.42 mm; outer honeycomb fired bodies 220 each having the same porosity, average pore diameter, the number of cells (cell density), cell wall thickness, and cell width as the inner honeycomb fired bodies 210, and a cross-sectional shape defined by three lines and one approximate circular arc with two angles of 90° each formed by two lines out of the three lines (line 220a = 45.6 mm, line 220b = 26.8 mm, line 220c = 41.8 mm) ; and outer honeycomb fired bodies 230 each having the same porosity, average pore diameter, the number of cell (cell density) cell wall thickness, and cell width as the inner honeycomb fired bodies 210, and a cross-sectional shape defined by three lines and one approximate circular arc with two angles of 90° and 135° each formed by two lines out of the three lines (line 230a = 24.9 mm, line 230b = 24.5 mm, line 230c = 41.8 mm). Here, the deformed cells 224a and 234a each were capable of receiving therein a circle of 0.90 mm in diameter in a cross section perpendicular to the longitudinal direction. Portions to be cells incapable of receiving therein a circle of 0.90 mm in diameter were filled with the same material as the material of the cell walls so as to be a part of the peripheral wall of the fired body, or were removed to leave cross-sectional recessed portions.
(4) An adhesive paste was applied to predetermined sides of the inner honeycomb fired bodies 210 and the outer honeycomb fired bodies 220 and 230. By interposing the adhesive paste, nine inner honeycomb fired bodies 210, eight outer honeycomb fired bodies 220, and eight outer honeycomb fired bodies 230 were bonded in the arrangement illustrated in Fig. 5. Then, the adhesive paste was heated at 180°C for 20 minutes to be solidified. As a result, a round pillar-shaped ceramic block 203 with 1-mm-thick adhesive layers was manufactured.
   The adhesive paste used here was the same as the adhesive paste in Example 1.
(5) By using the adhesive paste used in the above process (4), a coating material paste layer was formed around the periphery of the ceramic block 203. Thereafter, the coating material paste layer was dried at 120°C, so that a 203.2 mm (diameter) x 200 mm (length) round pillar-shaped honeycomb structured body 200 having a coat layer 202 formed on the periphery thereof was manufactured.

### (Example 4)

A honeycomb structured body was manufactured by the same procedure as that in Example 3, except that in manufacture of the outer honeycomb fired bodies 220 and 230, honeycomb molded bodies for the outer honeycomb fired bodies 220 and 230 were manufactured with extrusion-molding dies having different shapes such that the deformed cells 224a and 234a were formed to be capable of receiving a circle of 0.95 mm in diameter in a cross section perpendicular to the longitudinal direction, and every cell incapable of receiving therein a circle of 0.95 mm in diameter was filled with a wet mixture so as to be a part of the peripheral wall of the fired body or was removed to leave a cross-sectional recessed portion.

### (Comparative Example 3)

A honeycomb structured body was manufactured by the same procedure as that in Example 3, except that in manufacture of the outer honeycomb fired bodies 220 and 230, honeycomb molded bodies for the outer honeycomb fired bodies 220 and 230 were manufactured with extrusion-molding dies having different shapes such that the deformed cells 224a and 234a were formed to be capable of receiving a circle of 0.85 mm in diameter in a cross section perpendicular to the longitudinal direction, and every cell incapable of receiving therein a circle of 0.85 mm in diameter was filled with a wet mixture so as to be a part of the peripheral wall of the fired body or was removed to leave a cross-sectional recessed portion.

### (Comparative Example 4)

A honeycomb structured body was manufactured by the same procedure as that in Example 3, except that in manufacture of the outer honeycomb fired bodies 220 and 230, honeycomb molded bodies for the outer honeycomb fired bodies 220 and 230 were manufactured with extrusion-molding dies having different shapes such that the deformed cells 224a and 234a were formed to be capable of receiving a circle of 0.80 mm in diameter in a cross section perpendicular to the longitudinal direction, and every cell incapable of receiving therein a circle of 0.80 mm in diameter was filled with a wet mixture so as to be a part of the peripheral wall of the fired body or was removed to leave a cross-sectional recessed portion.

### (Evaluation of sealing defects)

The honeycomb structured bodies in Examples 3 and 4 and Comparative Examples 3 and 4 were checked for sealing defects in the same manner as that for the outer honeycomb fired bodies manufactured in Examples 1 and 2 and Comparative Examples 1 and 2, and the sealing-defect rates were calculated. The results are shown in Table 2 and Fig. 10.

**[Table 2]**

| | Shape of honeycomb fired body | Diameter of insertable circle (mm) | The number of sealing defects | Sealing-defect rate [%] |
|---|---|---|---|---|
| Example 3 | Fig. 6 | 0.90 | 2 | 4 |
| Example 4 | Fig. 6 | 0.95 | 0 | 0 |
| Comparative Example 3 | Fig. 6 | 0.85 | 6 | 12 |
| Comparative Example 4 | Fig. 6 | 0.80 | 9 | 18 |

As shown by the results in Table 2, the cell sealing-defect rate was 0% in Example 4 whereas the cell sealing-defect rate was 4% in Example 3, showing existence of a few defectively sealed cells. Still, the above sealing-defect rate was acceptable.
In contrast, in Comparative Examples 3 and 4, the respective cell sealing-defect rates greatly increased to 12% and 18%.

Fig. 10 is a graph showing the diameters of the insertable circles and the sealing-defect rates in Examples 1 to 4 and Comparative Examples 1 to 4.
In Examples 1 to 4 in which each deformed cell was capable of receiving therein a circle of 0.90 mm or 0.95 mm in diameter in a cross section perpendicular to the longitudinal direction as illustrated in Fig. 10, the sealing-defect rate was very low and was of a level that would not cause a problem.
In contrast, in Comparative Examples 1 to 4 in which each deformed cell was capable of receiving therein a circle of 0.85 mm or 0.80 mm in diameter in a cross section perpendicular to the longitudinal direction, the sealing-defect rate was not sufficiently low and decreased the manufacturing efficiency.

### (Third embodiment)

Fig. 7(a) is a cross-sectional view schematically illustrating a portion near an end of an outer honeycomb fired body constituting a honeycomb structured body according to a third embodiment of the present invention. Fig. 7(b) is a cross-sectional view schematically illustrating a portion near an end of an inner honeycomb fired body constituting the honeycomb structured body according to the third embodiment of the present invention.
The honeycomb structured body according to the third embodiment of the present invention is produced from honeycomb fired bodies 310 and honeycomb fired bodies 320 respectively having the same external shapes as those illustrated in Figs. 2 and 3, except that the basic cells and the peripheral cells excluding the deformed cells include large-volume cells and small-volume cells, and each large-volume cell has a larger area than the small-volume cells in a cross section perpendicular to the longitudinal direction. Also, the arrangement of the honeycomb fired bodies 310 and 320 constituting a honeycomb structured body is the same as that of the honeycomb structured body illustrated in Fig. 1.

More specifically, each inner honeycomb fired body 310 has an almost square cross-sectional shape and each outer honeycomb fired body 320 has a cross-sectional shape defined by three lines 320a, 320b, and 320c and one approximate circular arc 320d. Here, two angles each formed by two lines out of the three lines (the angle formed by the line 320b and the line 320c, and the angle formed by the line 320a and the line 320b) are 90° and 135°, respectively.

As illustrated in Figs. 7(a) and 7(b), each outer honeycomb fired body 320 has a peripheral wall 328 constituting the periphery of the ceramic block, and cells 321 (321a, 321b) and 324 (324a, 324b, 324c) in each outer honeycomb fired body 320 include peripheral cells 324a, 324b, and 324c in contact with the peripheral wall 328 constituting the periphery of the ceramic block, and basic cells 321a and 321b located under the peripheral cells 324a, 324b, and 324c. The basic cells 321 include large-volume cells 321a each having a larger area than small-volume cells 321b in a cross section perpendicular to the longitudinal direction, and the small-volume cells 321b each having a smaller cross-sectional area than the large-voluzne cells 321a.

The peripheral cells 324a, 324b, and 324c of each outer honeycomb fired body 320 include basic cells 324a and 324b each having the same shape as the basic cells 321a and 321b and deformed cells 324c each having a different shape from the basic cells 324a and 324b in a cross section perpendicular to the longitudinal direction. Each deformed cell 324c is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be a part of the peripheral wall 328 of the fired body, or is removed to leave a cross-sectional recessed portion.
The inner honeycomb fired bodies 310 are located under those outer honeycomb fired bodies 320 and include large-volume cells 310a and small-volume cells 310b. Here, the symbol 322 refers to a plug.

Each peripheral wall 328 has an irregularity due to a projected portion 328a and a recessed portion 328b in a cross section perpendicular to the longitudinal direction, and the projected portion 328a and the recessed portion 328b each have a cross-sectional shape defined by a curved line formed by R-chamfering. The curvature radius for the R-chamfering is 0.3 to 2.5 mm.
Also in this honeycomb structured body according to the third embodiment of the present invention, the cells are sealed at alternate ends to function as filters for capturing PMs.
The honeycomb structured body according to the third embodiment of the present invention provides the same effects as the first embodiment of the present invention, and can capture a larger amount of PMs than the honeycomb structured body 100 in which every cell has the same cross-sectional area.

Each of the honeycomb fired bodies 310 and 320 constituting the above honeycomb structured body is preferably a porous body made of silicon carbide or silicon-containing silicon carbide.

### (Fourth embodiment)

Figs. 8(a) to 8(c) are perspective views each schematically illustrating a honeycomb structured body according to a fourth embodiment of the present invention. Fig. 8(a) is a cross-sectional view schematically illustrating a portion near an end of a honeycomb structured body 400 according to the fourth embodiment of the present invention; Fig. 8(b) is a cross-sectional view schematically illustrating a portion near an end of an outer honeycomb fired body 420 constituting the honeycomb structured body illustrated in Fig. 8 (a) ; and Fig. 8 (c) is a cross-sectional view schematically illustrating a portion near an end of an outer honeycomb fired body 430 constituting the honeycomb structured body illustrated in Fig. 8(a).

The honeycomb structured body 400 illustrated in Figs. 8 (a) to 8 (c) has a ceramic block 403 formed by bonding, by interposing adhesive layers 401 (401A to 401D), eight outer honeycomb fired bodies 420 each having a shape illustrated in Fig. 8 (b), four outer honeycomb fired bodies 430 each having a shape illustrated in Fig. 8 (c), and four inner honeycomb fired bodies 410 located under the outer honeycomb fired bodies. The ceramic block 403 has a coat layer 402 formed on the periphery thereof.
Each inner honeycomb fired body 410 has an almost square cross-sectional shape.
Each outer honeycomb fired body 420 has a cross-sectional shape defined by three lines 420a, 420b, and 420c and one approximate circular arc 420d, as illustrated in Fig. 8 (b). The angles formed by the line 420a and the line 420b and by the line 420b and the line 420c were both 90°. As illustrated in Fig. 8 (c), the outer honeycomb fired body 430 has a cross-sectional shape defined by two lines 430a and 430b and one approximate circular arc 430c, and the line 430a and the line 430b form an angle of 90°.

As illustrated in Fig. 8 (b), each outer honeycomb fired body 420 has a peripheral wall 428 constituting the periphery of the ceramic block 403, and the cells 421 and 424 (424a, 424b) of each outer honeycomb fired body 420 include peripheral cells 424a and 424b in contact with the peripheral wall 428 constituting the periphery of the ceramic block 403, and basic cells 421 located under the peripheral cells 424a and 424b. The peripheral cells 424a and 424b of the outer honeycomb fired body 420 include basic cells 424b each having the same shape as the basic cells 421 and deformed cells 424a each having a different shape from the basic cells 424b in a cross section perpendicular to the longitudinal direction. Each deformed cell 424a is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be the peripheral wall 428 of the honeycomb fired body, or is removed to leave a cross-sectional recessed portion.

As illustrated in Fig. 8 (c), the outer honeycomb fired body 430 has a peripheral wall 438 constituting the periphery of the ceramic block 403, and the cells 431 and 434 (434a, 434b) of each outer honeycomb fired body 430 include peripheral cells 434a and 434b in contact with the peripheral wall 438 constituting the periphery of the ceramic block 403, and basic cells 431 located under the peripheral cells 434a and 434b. The peripheral cells 434a and 434b of the outer honeycomb fired body 430 include basic cells 434b each having the same shape as the basic cells 431 and deformed cells 434a each having a different shape from the basic cells 434b in a cross section perpendicular to the longitudinal direction. Each deformed cell 434a is capable of receiving therein a circle of 0.90 mm in diameter in a cross section perpendicular to the longitudinal direction. Such a cell incapable of receiving therein a circle of 0.90 mm in diameter is completely filled with the same material as the material of the cell walls so as to be a part of the peripheral wall 438 of the honeycomb fired body, or is removed to leave a cross-sectional recessed portion.

The peripheral walls 428 and 438 have an irregularity due to respective projected portions 428a and 438a and respective recessed portions 428b and 438b in a cross section perpendicular to the longitudinal direction, and the projected portions 428a and 438a and the recessed portions 428b and 438b each have a cross-sectional shape defined by a curved line formed by R-chamfering. The curvature radius for the R-chamfering is 0.3 to 2.5 mm.
Also in this honeycomb structured body 400, the cells are sealed at alternate ends to function as filters for capturing PMs.

Each of the honeycomb fired bodies 410, 420, and 430 constituting the above honeycomb structured body 400 is preferably a porous body made of silicon carbide or silicon-containing silicon carbide.

### (Other embodiments)

The cross-sectional shape of the honeycomb structured body according to an embodiment of the present invention is not limited to an approximate circle, and may be, for example, an approximate ellipse, an approximate flat oval, an approximate racetrack shape, or the like.
Although the ceramic block has a coat layer formed on the periphery thereof in the above embodiments, the ceramic block may not have a coat layer.

The honeycomb structured body according to an embodiment of the present invention is not required to always have a plurality of inner honeycomb fired bodies, and may have only one inner honeycomb fired body.
Fig. 9 is a cross-sectional view of a honeycomb structured body according to another embodiment of the present invention.

A honeycomb structured body 700 illustrated in Fig. 9 has the same structure as the honeycomb structured body 100 according to the first embodiment of the present invention, except having only one inner honeycomb fired body.
More specifically, the honeycomb structured body 700 illustrated in Fig. 9 has one inner honeycomb fired body 710 in place of the four inner honeycomb fired bodies 110 bonded by interposing the adhesive layers 101A in the honeycomb structured body 100 illustrated in Fig. 1.
The inner honeycomb fired body 710 has a larger cross-sectional area than the inner honeycomb fired bodies 100, but the functions thereof are the same. Outer honeycomb fired bodies 720 are the same as the honeycomb fired bodies 120 constituting the honeycomb structured body 100.

The peripheral wall of each honeycomb fired body has an irregularity due to a projected portion and a recessed portion in a cross-sectional perpendicular to the longitudinal direction, and the projected portion and the recessed portion each preferably have a cross-sectional shape formed by chamfering. The type of chamfering is not particularly limited and may be C-chamfering or R-chamfering. Still, R-chamfering is preferable and the curvature radius is preferably 0.3 to 2.5 mm.

Although the thickness of the peripheral wall constituting the periphery of the ceramic block is not particularly limited, the thickness is preferably larger than the thickness of the cells walls located on the inner side of the honeycomb fired body (ceramic block), and is more preferably 1.3 to 3.0 times the thickness of the cell walls located on the inner side of the honeycomb fired body (ceramic block).

In the honeycomb structured bodies according to the embodiments of the present invention, each inner honeycomb fired body preferably has an area of 900 to 2500 mm² in a cross section perpendicular to the longitudinal direction.
This is because a cross-sectional area of an inner honeycomb fired body within the above range is not likely to cause cracks in the honeycomb fired body when the honeycomb fired body expands or contracts in a regeneration process for the honeycomb structured body.

In the honeycomb structured bodies according to the embodiments of the present invention, the basic cells and the peripheral cells excluding the deformed cells may include large-volume cells and small-volume cells as illustrated in Fig. 7. In this case, each large-volume cell and each small-volume cell may have any cross-sectional shape. That is, each large-volume cell may have an almost octagonal cross-sectional shape and each small-volume cell may have an almost quadrangular cross-sectional shape as illustrated in Fig. 7. Alternatively, each large-volume cell and each small-volume cell may have an almost quadrangular shape in a cross section perpendicular to the longitudinal direction. Yet alternatively, each cell may have a cross-sectional shape defined by a curved line.
In the honeycomb structured bodies according to the embodiments of the present invention, the area ratio of the small-volume cells to the large-volume cells in a cross section perpendicular to the longitudinal direction (cross-sectional area of large-volume cells/cross-sectional area of small-volume cells) is preferably 1.01 to 9.00.

In the honeycomb structured bodies according to the embodiments of the present invention, the cells may not be sealed at the ends. Such a honeycomb structured body can be used as a catalyst supporting body.
The ceramic block of each embodiment of the present invention may include honeycomb fired bodies of cake-like shapes. The number of the cake-like shapes for the honeycomb fired bodies is not particularly limited, and may be only one or may be two or more.
The cake-like shape here means the shape of one of a plurality of pillar pieces resulting from cutting a pillar through the center. Combining a plurality of cake-like shaped honeycomb fired bodies gives a round-pillar shape.
A ceramic block may be formed from one honeycomb fired body.
In the case that a ceramic block is formed from one honeycomb fired body, the honeycomb fired body is preferably made of cordierite or aluminum titanate. Even when a ceramic block is formed from one honeycomb fired body, the same effects are expected to be provided.

Examples of the inorganic binder in the adhesive paste and the coating material paste include silica sol, alumina sol binders, and the like. Each of these may be used alone or two or more kinds of these may be used in combination. Silica sol binder is preferable among the inorganic binders.

Examples of inorganic particles in the above adhesive paste and coating material paste include inorganic particles produced from carbide, nitride, or the like, and more specifically include inorganic particles produced from silicon carbide, silicon nitride, boron nitride, or the like. Each of these may be used alone or two or more kinds of these may be used in combination. Among the inorganic particles, inorganic particles produced from silicon carbide are preferable because they have excellent thermal conductivity.

Examples of inorganic fibers and/or whisker in the adhesive paste and the coating material paste include inorganic fibers and/or whisker produced from silica alumina, mullite, alumina, silica, or the like. Each of these may be used alone or two or more kinds of these may be used in combination. Alumina fibers are preferable among the inorganic fibers.

The average pore diameter of the honeycomb fired bodies is preferably 5 to 30 µm. In the case that a honeycomb structured body formed from honeycomb fired body(ies) is used as a honeycomb filter, an average pore diameter of each honeycomb fired body of less than 5 µm may easily cause particulate clogging whereas, in contrast, an average pore diameter of more than 30 µm may allow particulates to pass through the pores. As a result, the honeycomb structured body may not be able to serve as a filter.

Here, the porosity and the pore diameter can be measured by a conventionally known method of mercury porosimetry.

The cell density of each honeycomb fired body in a cross section is not particularly limited, and is preferably 31.0 pcs/cm² (200 pcs/ (in²)) at the minimum, is preferably 93 pcs/ cm² (600 pcs/ (in²)) at the maximum, is more preferably 38.8 pcs/ cm² (250 pcs/ (in²)) at the minimum, and is more preferably 77.5 pcs/cm² (500 pcs/ (in²)) at the maximum.
The thickness of the cell wall of each honeycomb fired body is not particularly limited, and is preferably 0.1 to 0.4 mm.

The main component of the honeycomb fired body is not limited to silicon carbide, and may be powders of the following ceramics: nitride ceramics such as aluminum nitride, silicon nitride, boron nitride, and titanium nitride; carbide ceramics such as zirconium carbide, titanium carbide, tantalum carbide, and tungsten carbide; oxide ceramics such as cordierite and aluminum titanate; and the like. Among these, the main component of a honeycomb fired body, in the case of a honeycomb structured body formed from a plurality of honeycomb fired bodies, is preferably non-oxide ceramics, and is particularly preferably silicon carbide or silicon-containing silicon carbide because they are excellent in heat resistance, mechanical strength, thermal conductivity, and the like.

The organic binder to be mixed into the wet mixture is not particularly limited, and examples of compounds used as the organic binder include methylcellulose, carboxy methylcellulose, hydroxy ethylcellulose, polyethylene glycol, and the like. Methylcellulose is preferable among these. The blending amount of the organic binder is preferably 1 to 10 parts by weight per 100 parts by weight of the ceramic powder.
The plasticizer to be mixed into the wet mixture is not particularly limited, and examples of compounds used as the plasticizer include glycerin.
The lubricant to be mixed into the wet mixture is not particularly limited, and examples of compounds used as the lubricant include polyoxyalkylene-based compounds such as polyoxyethylene alkyl ether and polyoxypropylene alkyl ether; polyoxyethylene monobutyl ether; polyoxypropylene monobutyl ether; and the like.
The plasticizer and the lubricant may not be contained in the wet mixture in some cases.

In addition, a dispersant solution may be used in preparation of the above wet mixture, and examples of the dispersant solution include water, an organic solvent such as benzene, alcohol such as methanol, and the like.
Furthermore, a molding aid may be added to the wet mixture.
The molding aid is not particularly limited, and examples of compounds used as the molding aid include ethylene glycol, dextrin, fatty acid, fatty acid soap, polyalcohol, and the like.

Furthermore, a pore-forming agent such as balloons that are fine hollow spheres including oxide-based ceramics, spherical acrylic particles, and graphite may be added to the wet mixture according to need.
The balloon is not particularly limited, and examples thereof include alumina balloon, glass micro balloon, shirasu balloon, fly ash balloon (FA balloon), mullite balloon, and the like. Alumina balloon is preferable among these.

Each of the above honeycomb structured bodies may have supported therein a catalyst for purifying exhaust gases, and preferable examples of the catalyst include noble metals such as platinum, palladium, and rhodium. Among these, platinum is more preferable. Other examples of the catalyst include alkali metals such as potassium and sodium, and alkaline earth metals such as barium. Each of these catalysts may be used alone or two or more kinds of these may be used in combination.

The bonding process in the method of producing a honeycomb structured body according to each embodiment of the present invention is performed by a method of applying an adhesive paste to a side of each honeycomb fired body. Alternatively, the bonding process may be performed by another method such as a method of provisionally fixing honeycomb fired bodies in a mold of approximately the same shape as a ceramic block to be manufactured (or an aggregate of honeycomb fired bodies), and then injecting an adhesive paste between the honeycomb fired bodies.

### EXPLANATION OF SYMBOLS

- 100, 200, 700: Honeycomb structured body
- 101, 101A to 101D, 201A to 201D, 401A to 401D,:
- 701B to 701D: Adhesive layer
- 102, 202, 702: Coat layer
- 103, 203, 703: Ceramic block
- 110, 210, 310, 710: Inner honeycomb fired body
- 120, 220, 230, 310, 320, 420, 430, 720: Outer honeycomb fired body
- 128, 228, 238, 328, 428, 438: Peripheral wall
- 111, 121, 124b, 221, 224b, 231, 234b, 311a, 311b,:
- 321a, 321b, 324a, 324b, 421, 424b, 431, 434b: Cell
- 124a, 224a, 234a, 324c, 424a, 434a: Deformed cell
- 112, 122, 222, 232, 312, 322, 422, 432: Plug
- 113, 123, 223, 233, 313, 323, 423, 433: Cell wall

## Claims

1. A honeycomb structured body comprising a ceramic block,
the ceramic block including a honeycomb fired body that has a peripheral wall constituting a periphery of the honeycomb fired body and has a plurality of cells longitudinally disposed in parallel with one another with a cell wall interposed between the cells,
wherein the cells comprise:
peripheral cells in contact with a peripheral wall of the honeycomb fired body constituting a periphery of the ceramic block; and
basic cells residing under the peripheral cells,
the peripheral cells comprise deformed cells each having a shape lacking a part of the shape of the basic cell and a smaller cross-sectional area than the basic cell in a cross section perpendicular to the longitudinal direction of the honeycomb fired body, and
each of the deformed cells is capable of receiving therein a circle of 0.90 mm in diameter, in a cross section perpendicular to the longitudinal direction.

2. The honeycomb structured body according to claim 1,
wherein
each of the deformed cells is capable of receiving therein a circle of 0.95 mm in diameter, in a cross section perpendicular to the longitudinal direction.

3. The honeycomb structured body according to any one of claims 1 to 2,
wherein
the ceramic block is formed by bonding a plurality of honeycomb fired bodies by interposing adhesive layers.

4. The honeycomb structured body according to claim 3,
wherein
the ceramic block is formed by combining the honeycomb fired bodies having different shapes from each other, and comprises:
outer honeycomb fired bodies each having a peripheral wall constituting the periphery of the ceramic block; and
inner honeycomb fired bodies residing under the outer honeycomb fired bodies.

5. The honeycomb structured body according to any one of claims 1 to 4,
wherein
the peripheral wall of the honeycomb fired body constituting the periphery of the ceramic block has an irregularity comprising a projected portion and a recessed portion, in a cross section perpendicular to the longitudinal direction,
the projected portion has a shape defined by a curved line formed by chamfering the projected portion, and
the recessed portion has a shape defined by a curved line formed by chamfering the recessed portion.

6. The honeycomb structured body according to claim 5,
wherein
the projected portion has a shape formed by R-chamfering the projected portion,
the recessed portion has a shape formed by R-chamfering the recessed portion, and
a curvature radius for the R-chamfering is 0.3 to 2.5 mm.

7. The honeycomb structured body according to any one of claims 1 to 6,
wherein
each of the basic cells and each of the peripheral cells excluding the deformed cells have an almost quadrangular shape in a cross section perpendicular to the longitudinal direction.

8. The honeycomb structured body according to any one of claims 1 to 7,
wherein
the basic cells and the peripheral cells excluding the deformed cells comprise large-volume cells and small-volume cells, and
each of the large-volume cells has a larger area than the small-volume cells in a cross section perpendicular to the longitudinal direction.

9. The honeycomb structured body according to claims 8,
wherein
each of the large-volume cells and each of the small-volume cells have an almost quadrangular shape, in a cross section perpendicular to the longitudinal direction.

10. The honeycomb structured body according to claim 8,
wherein
each of the large-volume cells has an almost octagonal shape and each of the small-volume cells has an almost quadrangular shape, in a cross section perpendicular to the longitudinal direction.

11. The honeycomb structured body according to claim 8,
wherein
each of the large-volume cells and each of the small-volume cells have a shape defined by a curved line, in a cross section perpendicular to the longitudinal direction.

12. The honeycomb structured body according to any one of claims 1 to 11,
wherein
the peripheral wall of the honeycomb fired body constituting the periphery of the ceramic block has a larger thickness than a cell wall located on an inner side of the honeycomb fired body.

13. The honeycomb structured body according to claim 12,
wherein
the peripheral wall of the honeycomb fired body constituting the periphery of the ceramic block has a thickness of 1.3 to 3.0 times the thickness of a cell wall located on an inner side of the honeycomb fired body.

14. The honeycomb structured body according to any one of claims 4 to 13,
wherein
each of the outer honeycomb fired bodies in a cross section is an approximate sector having a shape defined by three straight lines and a peripheral wall constituting a part of the periphery of the ceramic block in a cross section perpendicular to the longitudinal direction, and each of the inner honeycomb fired bodies is an approximate quadrangle unit that has an almost quadrangular shape in a cross section perpendicular to the longitudinal direction.

15. The honeycomb structured body according to any one of claims 1 to 14,
wherein
the cells are sealed at alternate ends.

16. The honeycomb structured body according to any one of claims 1 to 15,
wherein
the ceramic block has a coat layer formed on the periphery thereof.

## Patentansprüche

1. Wabenstrukturkörper mit einem Keramikblock, wobei
der Keramikblock einen gebrannten Wabenkörper aufweist, der eine Umfangswand aufweist, die einen Umfang des gebrannten Wabenkörpers bildet und mehrere Zellen aufweist, die längs, parallel zueinander, mit einer zwischen den Zellen angeordneten Zellwand, angeordnet sind;
wobei die Zellen aufweisen:
Umfangszellen, die in Kontakt mit einer Umfangswand des gebrannten Wabenkörpers, die einen Umfang des Keramikblocks bildet, in Kontakt stehen; und
Basiszellen, die sich unter den Umfangszellen befinden, wobei
die Umfangszellen deformierte Zellen aufweisen, die jeweils eine Form, der ein Teil der Form der Basiszelle fehlt und in einem Querschnitt senkrecht zu der Längsrichtung des gebrannten Wabenkörpers, eine kleinere Querschnittsfläche als die Basiszelle, aufweisen, und
jede der deformierten Zellen in der Lage ist, in einem Querschnitt senkrecht zur Längsrichtung, darin einen Kreis mit einem Durchmesser von 0,90 mm aufzunehmen.

2. Wabenstrukturkörper nach Anspruch 1, wobei
jede der deformierten Zellen in der Lage ist, in einem Querschnitt senkrecht zur Längsrichtung, darin einen Kreis mit einem Durchmesser von 0,95 mm aufzunehmen.

3. Wabenstrukturkörper nach einem der Ansprüche 1 bis 2, wobei
der Keramikblock durch Verbinden mehrerer gebrannter Wabenkörper durch Einfügen von Klebeschichten, ausgebildet ist.

4. Wabenstrukturkörper nach Anspruch 3, wobei
der Keramikblock durch Kombinieren der gebrannten Wabenkörper, die voneinander verschiedene Formen aufweisen, ausgebildet ist, und aufweist:
äußere gebrannte Wabenkörper, die jeweils eine Umfangswand aufweisen, die den Umfang des Keramikblocks bildet; und
innere gebrannte Wabenkörper, die sich unter den äußeren gebrannten Wabenkörper befinden.

5. Wabenstrukturkörper nach einem der Ansprüche 1 bis 4, wobei
die Umfangswand des gebrannten Wabenkörpers, die den Umfang des Keramikblocks bildet, eine Unregelmäßigkeit aufweist, die in einem Querschnitt senkrecht zur Längsrichtung, einen hervorstehenden Abschnitt und einen ausgenommenen Abschnitt aufweist, und
der hervorstehende Abschnitt eine Form aufweist, die durch eine gekrümmte Linie, die durch Abschrägen des hervorstehenden Abschnitts ausgebildet ist, und
der ausgenommene Abschnitt eine Form aufweist, die durch eine gekrümmte Linie, die durch Abschrägen des ausgenommenen Abschnitts, ausgebildet ist.

6. Wabenstrukturkörper nach Anspruch 5, wobei
der hervorstehende Abschnitt eine Form aufweist, die durch R-Abschrägen des hervorstehenden Abschnitts ausgebildet ist,
der ausgenommene Bereich eine Form aufweist, die durch R-Abschrägen des ausgenommenen Bereichs ausgebildet ist, und
ein Krümmungsradius der R-Abschrägung 0,3 bis 2,5 mm beträgt.

7. Wabenstrukturkörper nach einem der Ansprüche 1 bis 6, wobei
jede der Basiszellen und jeder der Umfangszellen, ausgenommen den deformierten Zellen, in einem Querschnitt senkrecht zur Längsrichtung eine nahezu viereckige Form aufweisen.

8. Wabenstrukturkörper nach einem der Ansprüche 1 bis 7, wobei
die Basiszellen und die Umfangszellen, ausgenommen den deformierten Zellen, großvolumigen Zellen und kleinvolumige Zellen aufweisen, und
jede der großvolumigen Zellen in einem Querschnitt senkrecht zu der Längsrichtung eine größere Fläche als die kleinvolumigen Zellen aufweist.

9. Wabenstrukturkörper nach Anspruch 8, wobei
jede der großvolumigen Zellen und jede der kleinvolumigen Zellen in einem Querschnitt senkrecht zur Längsrichtung eine nahezu viereckige Form aufweist.

10. Wabenstrukturkörper nach Anspruch 8, wobei
jede der großvolumigen Zellen eine nahezu achteckige Form und jede der kleinvolumigen Zellen eine nahezu viereckige Form in einem Querschnitt senkrecht zur Längsrichtung aufweist.

11. Wabenstrukturkörper nach Anspruch 8, wobei
jede der großvolumigen Zellen und jede der kleinvolumigen Zellen in einem Querschnitt senkrecht zur Längsrichtung, eine durch eine gekrümmte Linie definierte Form, aufweist.

12. Wabenstrukturkörper nach einem der Ansprüche 1 bis 11, wobei
die Umfangswand des gebrannten Wabenkörpers, die den Umfang des Keramikblocks bildet, eine größere Dicke als eine, an einer Innenseite des gebrannten Wabenkörpers angeordnete Zellwand, aufweist.

13. Wabenstrukturkörper nach Anspruch 12, wobei
die Umfangswand des gebrannten Wabenkörpers, die den Umfang des Keramikblocks ausbildet, eine Dicke von 1,3 bis 3,0-mal der Dicke einer, an einer Innenseite des gebrannten Wabenkörpers angeordneten Zellwand, aufweist.

14. Wabenstrukturkörper nach einem der Ansprüche 4 bis 13, wobei
jeder der äußeren gebrannten Wabenkörper in einem Querschnitt ein näherungsweises Bogenstück ist, das eine durch drei gerade Linien und eine Umfangswand, die in einem Querschnitt senkrecht zur Längsrichtung einen Teil des Umfangs des Keramikblocks bildet, definierte Form aufweist, und jeder der inneren gebrannten Wabenkörper eine näherungsweise Viereckeinheit ist, die in einem Querschnitt senkrecht zur Längsrichtung eine nahezu viereckige Form aufweist.

15. Wabenstrukturkörper nach einem der Ansprüche 1 bis 14, wobei
die Zellen an abwechselnden Enden abgedichtet sind.

16. Wabenstrukturkörper nach einem der Ansprüche 1 bis 15, wobei
der keramische Block eine Beschichtungsschicht aufweist, die auf dessen Umfang ausgebildet ist.

## Revendications

1. Corps structuré en nid d'abeilles comprenant un bloc céramique,
le bloc céramique comportant un corps cuit en nid d'abeilles qui a une paroi périphérique constituant une périphérie du corps cuit en nid d'abeilles et a une pluralité de cellules disposées longitudinalement en parallèle les unes avec les autres avec une paroi cellulaire interposée entre les cellules,
dans lequel les cellules comprennent :
des cellules périphériques en contact avec une paroi périphérique du corps cuit en nid d'abeilles constituant une périphérie du bloc céramique ; et
des cellules de base se trouvant en-dessous des cellules périphériques,
les cellules périphériques comprennent des cellules déformées ayant chacune une forme dépourvue d'une partie de la forme de la cellule de base et une surface de section transversale plus petite que celle de la cellule de base dans une section transversale perpendiculaire à la direction longitudinale du corps cuit en nid d'abeilles, et
chacune des cellules déformées est capable d'y recevoir un cercle ayant un diamètre de 0,90 mm, dans une section transversale perpendiculaire à la direction longitudinale.

2. Corps structuré en nid d'abeilles selon la revendication 1,
dans lequel
chacune des cellules déformées est capable d'y recevoir un cercle ayant un diamètre de 0,95 mm, dans une section transversale perpendiculaire à la direction longitudinale.

3. Corps structuré en nid d'abeilles selon l'une quelconque des revendications 1 à 2,
dans lequel
le bloc céramique est formé en liant une pluralité de corps cuits en nid d'abeilles en interposant des couches adhésives.

4. Corps structuré en nid d'abeilles selon la revendication 3,
dans lequel
le bloc céramique est formé en combinant les corps cuits en nid d'abeilles ayant des formes différentes les unes des autres, et comprend :
des corps cuits en nid d'abeilles externes ayant chacun une paroi périphérique constituant la périphérie du bloc céramique ; et
des corps cuits en nid d'abeilles internes se trouvant en-dessous des corps cuits en nid d'abeilles externes.

5. Corps structuré en nid d'abeilles selon l'une quelconque des revendications 1 à 4,
dans lequel
la paroi périphérique du corps cuit en nid d'abeilles constituant la périphérie du bloc céramique a une irrégularité comprenant une partie en saillie et une partie en retrait, dans une section transversale perpendiculaire à la direction longitudinale,
la partie en saillie a une forme définie par une ligne incurvée formée par chanfreinage de la partie en saillie, et
la partie en retrait a une forme définie par une ligne incurvée formée par chanfreinage de la partie en retrait.

6. Corps structuré en nid d'abeilles selon la revendication 5,
dans lequel
la partie en saillie a une forme formée par chanfreinage R de la partie en saillie,
la partie en retrait a une forme formée par chanfreinage R de la partie en retrait, et
un rayon de courbure pour le chanfreinage R est de 0,3 à 2,5 mm.

7. Corps structuré en nid d'abeilles selon l'une quelconque des revendications 1 à 6,
dans lequel
chacune des cellules de base et chacune des cellules périphériques à l'exception des cellules déformées ont une forme quasi quadrangulaire dans une section transversale perpendiculaire à la direction longitudinale.

8. Corps structuré en nid d'abeilles selon l'une quelconque des revendications 1 à 7,
dans lequel
les cellules de base et les cellules périphériques à l'exception des cellules déformées comprennent des cellules de grand volume et des cellules de petit volume, et
chacune des cellules de grand volume a une surface plus grande que celles des cellules de petit volume dans une section transversale perpendiculaire à la direction longitudinale.

9. Corps structuré en nid d'abeilles selon la revendication 8, dans lequel
chacune des cellules de grand volume et chacune des cellules de petit volume ont une forme quasi quadrangulaire, dans une section transversale perpendiculaire à la direction longitudinale.

10. Corps structuré en nid d'abeilles selon la revendication 8,
dans lequel
chacune des cellules de grand volume a une forme quasi octogonale et chacune des cellules de petit volume a une forme quasi quadrangulaire, dans une section transversale perpendiculaire à la direction longitudinale.

11. Corps structuré en nid d'abeilles selon la revendication 8,
dans lequel
chacune des cellules de grand volume et chacune des cellules de petit volume ont une forme définie par une ligne incurvée, dans une section transversale perpendiculaire à la direction longitudinale.

12. Corps structuré en nid d'abeilles selon l'une quelconque des revendications 1 à 11,
dans lequel
la paroi périphérique du corps cuit en nid d'abeilles constituant la périphérie du bloc céramique a une épaisseur supérieure à celle d'une paroi cellulaire située sur un côté interne du corps cuit en nid d'abeilles.

13. Corps structuré en nid d'abeilles selon la revendication 12,
dans lequel
la paroi périphérique du corps cuit en nid d'abeilles constituant la périphérie du bloc céramique a une épaisseur de 1,3 à 3,0 fois l'épaisseur d'une paroi cellulaire située sur un côté interne du corps cuit en nid d'abeilles.

14. Corps structuré en nid d'abeilles selon l'une quelconque des revendications 4 à 13,
dans lequel
chacun des corps cuits en nid d'abeilles externes dans une section transversale est un secteur approximatif ayant une forme définie par trois lignes droites et une paroi périphérique constituant une partie de la périphérie du bloc céramique dans une section transversale perpendiculaire à la direction longitudinale, et chacun des corps cuits en nid d'abeilles internes est une unité quadrilatère approximative qui a une forme quasi quadrangulaire dans une section transversale perpendiculaire à la direction longitudinale.

15. Corps structuré en nid d'abeilles selon l'une quelconque des revendications 1 à 14,
dans lequel
les cellules sont scellées au niveau d'extrémités alternées.

16. Corps structuré en nid d'abeilles selon l'une quelconque des revendications 1 à 15,
dans lequel
le bloc céramique a une couche de revêtement formée sur sa périphérie.
